# EUROPEAN PATENT SPECIFICATION

(11) **EP 3 223 607 B1**
(45) Date of publication and mention of the grant of the patent: **27.03.2024**
(21) Application number: 15820644.1
(22) Date of filing: 29.11.2015
(51) Int. Cl.: A01N 3/04, A23B 7/16, C09D 191/06

(54) **EDIBLE MORPHOLINE-FREE COATING FORMULATIONS**
ESSBARE MORPHOLINFREIE BESCHICHTUNGSFORMULIERUNGEN
FORMULATIONS DE REVÊTEMENT SANS MORPHOLINE COMESTIBLES

(30) Priority: 30.11.2014 US 201462085570 P
(43) Date of publication of application: 04.10.2017
(73) Proprietor: Yissum Research Development Company of the Hebrew University of Jerusalem Ltd., 91390 Jerusalem (IL)
(72) Inventor: NUSSINOVITCH, Amos, 76566 Rehovot (IL); RABINOWITCH, Haim David, 55250 Kiryat Ono (IL)
(74) Representative: Straus, Alexander
(86) International application number: PCT/IL2015/051163
(87) International publication number: WO 2016/084094

(56) References cited:
- WO-A1-2013/144961
- WO-A2-03/001921
- US-A- 2 364 632
- US-A- 6 068 867

## Description

### FIELD OF THE INVENTION

The present invention relates to compositions and methods for coating of plants, either edible, medicinal, or ornamental, which are particularly useful for minimizing postharvest losses of plant weight and preventing or slowing down post-harvest reduction in quality.

### BACKGROUND OF THE INVENTION

Edible coatings have been employed for over 800 years to extend the shelf life of foods. In the United States, wax coatings have been utilized commercially since 1930s, when oranges were coated with melted paraffin waxes. These early coatings were used to further improve the appearance of the waxy glossy skin. The development of wax coatings was aimed to mimic the natural coatings of fruits and vegetables. Such coatings were also reported to reduce water losses and oxygen diffusion, thus lowering respiration rate and withering, and extending shelf life of the coated produce. However, the reduced respiratory gas exchange leads to fermentation, with the consequent buildup of ethanol, other volatiles, and bitter flavors [Sinclair, W.B., (1984), The Biochemistry and Physiology of the Lemon. University of California Division of Agriculture and Natural Resources: Oakland, CA]. Additional drawbacks of present-day wax coatings are their structural instability, generally requiring a support matrix.

Alternative common coating compositions are gelation solutions and hydrocolloids. Acceptable surface coating made of such materials depends on cross-linking of the hydrocolloid by a solution of a gelation-inducing agent.

E.P. Patent No. 277448 discloses the formation of an edible coating made of gelatin and polysaccharide that depends on cross-linking agents containing calcium ions-.

U.S. Patent Nos. 6,299,915 and 6,068,867, to some of the inventors of the present invention, disclose a hydrocolloid protective coating for food and other agricultural products comprised of dried hydrocolloid gel, one or more natural compounds isolated from the surface of said product or a compound substantially equivalent thereto, and other optional additives. These coatings improve the protection of the product, thereby extending its shelf-life.

Although hydrocolloid coatings form a good barrier that attenuates the exchange of oxygen and carbon dioxide with the environment, and has good mechanical properties, they do not sufficiently attenuate the passage of water vapors, thereby failing to reduce transpiration and consequently continuous weight loss of the coated organs and shriveling thereof.

Several attempts have been made to develop coating materials that potentially modify internal gas composition for short-term storage [H.J. Park, Trends in Food Science & Technology 10 (1999) 254-260]. For Example, U.S. Patent Nos. 7,771,763 and 7,169,423 disclose edible compositions comprised of chitosan polymer.

Composite coating compositions are made of a mixture of waxes and hydrocolloids, where the aim is to take advantage of the beneficial properties of each chemical group and compensate for their disadvantages. In general, waxes efficiently block water vapor diffusion and provide glossy appearance. In turn, the hydrocolloids enable selective permeability to carbon dioxide and oxygen and the required mechanical properties of the coating.

International Patent Application Publ. No. WO 2013/144961 to one of the inventors of the present invention is directed to compositions and methods for reducing the weight loss and/or preserving the natural gloss of post-harvest edible plant matter, the methods comprising applying to the surface of the plant matter a composition comprising an edible wax having a melting temperature below 70°C; a hydrocolloid; a fatty acid; an emulsifier; and water, wherein said edible wax is present in a weight percent ranging from about 10% to about 25% of the total weight of the composition.

U.S. Patent application No. 2004/0146617 and U.S. Patent No. 7,222,455 disclose methods for suppressing cracking, stem browning, and water losses in vegetables or fruit, such as cherries. The methods include application of wax emulsion made of complex hydrocarbons, one or more emulsifying agents, and water. In some embodiments, the wax emulsion comprises from about 0.125% to about 25% (weight/weight) of carnauba wax, from about 0.1% to about 16% (weight/weight) of oleic acid, and from about 0.03% to about 6% (weight/weight) of morpholine, and from about 53% to about 99.7% (weight/weight) of water.

Morpholine O(CH₂CH₂)₂NH is an organic compound commonly used as an emulsifier in the process of waxing and/or coating of fresh fruits and vegetables. Morpholine is frequently added to certain waxes as morpholine oleate when fruits such as apple, citrus and pineapple are being coated. Morpholine oleate easily mixes with waxes and facilities their even spread and smooth appearance. Morpholine also facilitates the solubilization of shellac, one of the waxy constituents of fruit coating. Additionally, morpholine enables application of wax containing coating materials in a water-based liquid form. When the coating material is dried by a blow of hot air, the residual morpholine evaporates but for minute traces.

In addition to its important role in fruit and vegetables' coating, morpholine is widely used in the USA, Canada, Australia and elsewhere as a food additive. However, in the European Union, the use of morpholine and of other amine containing emulsifiers is prohibited.

In foods, nitrites are formed mainly from naturally-occurring nitrates. In the presence of excess nitrites, morpholine can be chemically modified (nitrosated) to form N-nitrosomorpholine (NMOR), a genotoxic carcinogen in rodents. While morpholine by itself does not pose health concerns, the main apprehension is whether NMOR are produced upon ingestion by humans, in amounts that may pose a health risk. Under European Union food additives legislation (EC Regulation 1333/2008), morpholine is barred from use for glazing fresh fruits. Hence, morpholine treated produce is banned from marketing and sale in the EU - a fact well known in countries where its use is permitted. Consequently, the latter apply strict protocols guaranteeing that fruit coated with morpholine containing waxes are not destined for the EU.

Several morpholine-free water-based wax compositions for food coating were developed to date. Hagenmaier et al. disclose edible coatings containing ammonia instead of morpholine [R. D. Hagenmaier, R. A. Baker, J. Agric. Food Chem. 1997, 45, 349-352].

Like morpholine, the alkaline ammonia "acts as a cation in aqueous solution but evaporates as the coating dries" [R. D. Hagenmaier, Proc. Fla. State Hort. Soc. 117; 396-402, 2004]. Therefore, ammonia meets the chemical demands of the coating composition. However, ammonia evaporates very rapidly (boiling point 37°C), especially at the high temperatures (about 95°C) required for the formulation of, for example, carnauba wax micro-emulsions. Even at ambient temperatures, ammonia evaporates from coating formulations fast enough to make it necessary to keep them tightly closed. Ammonia vapor is unpleasant, toxic and, in addition, can cause false alarms of ammonia-based refrigeration system leakage, for example, in packing houses.

Edible coatings have been reported to be effective for various kinds of fruits and vegetables. However, little is known on edible coatings on plant protected by an outer natural layer or tunic of leaf scales, such as in garlic and onion bulbs. Harvested on maturation, garlic bulbs are stored at either ambient conditions or cold rooms. Either way, life activities of the living tissues (storage tissues, meristems and regeneration buds) go on, including respiration and energy consumption during cell division, differentiation and elongation. Additionally, water is lost by evaporation and transpiration. Some genotypes tend to lose their tunics, thus further facilitating transpiration, invasion of pests, wounding, susceptibility to mechanical bruises, and in the case of garlic, even breaking of the bulbs to individual cloves. Transpiration from dry bulbs and respiration (consumption of reserves) result in a significant weight losses. Biochemical processes such as breakdown of various chemicals with consequent reduction in quality (including chemicals that allow for Maillard reactions, e.g., reserves such as fructans and starch to monosaccharides) dry out the skins with the consequent loss of skins. Moreover, quality is reduced when bulbs shrivel and/or suffer bruises and breakups with the consequent rejection by wholesalers, retailers and consumers. In addition, pest infection leads to a significant reduction in quality, in rotting, and in accumulation of mycotoxins such as fumonisin excreted by microorganisms such as *Fusarium proliferatum.*

Geraldine et al. (2008) described minimally processed garlic cloves coated by 1% agar-agar based compositions comprising of 0.2% chitosan and 0.2% acetic acid [R.M. Geraldine et al. / Carbohydrate Polymers 72 (2008) 403-409]. Nussinovitch et al. (1996) described garlic bulbs coating by immersion in a food grade sodium alginate solution followed by application of calcium chloride dissolved in water [A. Nussinovitch et. al, Volume 61, No. 4, 1996 J. Food Sci. 769].

U.S. Patent No. 3,865,962 discloses a process for coating bulb onions by immersion in an aqueous alginate solution with subsequent gelation by treatment with an aqueous calcium ion.

WO 03/001921 discloses a composition for coating fresh produce, such as fruits, vegetables, and fowl eggs, to protect and extend the shelf life of said produce. The composition comprises a hydrophobic component derived from natural biological sources, i.e. a natural wax or vegetable oil; an alkali agent derived from natural biological sources; and water.

It would be advantageous to have composite compositions made of wax-hydrocolloid mixtures, providing superior protection against weight losses and mechanical stability properties, thus reducing mechanical damages, for coating geophytes such as garlic and onion.

There remains an unmet need in the art for edible coating compositions, free of morpholine, for shelf-life extension of the post-harvest plant matter, wherein such composition can be applied to various plants, including those having natural tunics.

### SUMMARY OF THE INVENTION

The present invention provides safe, edible coating compositions including a hydrocolloid, an edible wax, a fatty acid and an edible alkaline component. These novel coating compositions are useful for coating plant matter and thereby reduce the plant's postharvest water losses, weight and quality reduction. Moreover, the compositions reduce mechanical damages and provide a defense layer against the penetration of and infection with pests. The present invention is based in part on the unexpected finding that potentially toxic amine containing emulsifiers, such as morpholine, can be successfully replaced by edible alkaline components.

More specifically, compositions as disclosed here were found to be particularly beneficial when applied to garlic and onions, whose bulbs are naturally coated with tunics made of the oldest leaves' sheaths. Surprisingly, compositions according to the principles of the present invention reduced the weight loss of coated clonally propagated garlic bulbs by about 47% over about three months as compared to the non-coated garlic, and by about 40% as compared to the garlic coated by similar compositions comprising morpholine. Similarly, the weight loss of post-harvest onion bulbs coated by compositions of the present invention was reduced by about 23% over about three months as compared to the non-coated onion bulbs of the same variety, from the same field harvested in tandem with the bulk of the coated bulbs. The coating compositions of the present disclosure were also applied to peppers, eggplants, and tomatoes, showing a significant reduction in weight losses as compared to the uncoated fruit.

The present invention provides, in one aspect, a method for reducing the weight loss of a post-harvest plant matter by providing an artificial skin/coating, comprising the application to the surface of the plant matter a composition for coating a postharvest plant matter, comprising a gelling hydrocolloid polymer in a weight percent ranging from about 0.5% to about 5% of the total weight of the wet composition; an edible wax in a weight percent ranging from about 0.1% to about 5% of the total weight of the wet composition; a fatty acid; water; the composition comprising less than 0.01% (w/w) of morpholine and less than 0.01% (w/w) of any additional emulsifier other than the edible alkaline component; the edible alkaline component being an inorganic salt in a weight percent ranging from about 0.05% to about 2% of the total weight of the wet composition; wherein the edible alkaline component enables formation of a homogeneous emulsion without any additional emulsifier. The plant matter comprises a bulb having leaf scales. The method further comprises the steps of allowing the excess composition to drip from the plant matter, applying to the plant matter an additional composition comprising a cross-linking or gelation inducing agent and drying the coating of the plant matter, thereby forming a coating layer on the surface of said plant matter. In some embodiments, the edible alkaline component is essentially free of amines.

In further embodiments, the inorganic alkaline component is an alkali metal salt or an alkaline earth metal salt. In certain such embodiments, the edible inorganic alkaline component is selected from the group consisting of sodium hydroxide (NaOH), potassium hydroxide (KOH) sodium carbonate (Na₂CO₃), potassium carbonate (K₂CO₃), sodium bicarbonate (NaHCO₃), potassium bicarbonate (KHCO₃) and any combination thereof. Each possibility represents a separate embodiment of the present invention. In other embodiments, the edible alkaline component is present in a weight percent ranging from about 1% to about 30% of the total weight of the dry composition.

In certain embodiments, the gelling hydrocolloid polymer is selected from the group consisting of alginate, agar, agarose, gelatin, low methoxy pectin (LMP), chitosan, gellan, carrageenan, and mixtures thereof. Each possibility represents a separate embodiment of the invention. In a specific embodiment, the hydrocolloid polymer is alginate. In certain embodiments, the hydrocolloid polymer is present in a weight percent of about 1% or about 2% of the total weight of the wet composition. In certain embodiments, the hydrocolloid polymer is present in a weight percent ranging from about 20% to about 60% of the total weight of the dry composition.

In certain embodiments, the edible wax is selected from the group consisting of beeswax, carnauba wax, candelilla wax, alpha wax, montan wax, rice-bran wax, Japan wax and mixtures thereof. Each possibility represents a separate embodiment of the present invention. In certain embodiments, the edible wax has a melting temperature above ambient temperatures but lower than about 70°C. In further embodiments, the edible wax has a melting temperature between about 40°C and about 70°C. In a specific embodiment, the edible wax is beeswax.

In certain embodiments, the fatty acid is selected from the group consisting of oleic acid, stearic acid, palmitic acid, lauric acid, myristic acid, behenic acid, isostearic acid, and mixtures thereof. Each possibility represents a separate embodiment of the present invention. In a specific embodiment, the fatty acid is oleic acid. In some embodiments, the fatty acid is present in a weight percent ranging from about 0.01% to about 2% of the total weight of the wet composition. In other embodiments, the fatty acid is present in a weight percent ranging from about 1% to about 40% of the total weight of the dry composition.

In some embodiments, the composition for coating a postharvest plant matter is stable at ambient conditions for at least about one month. In some embodiments, the composition for coating a postharvest plant matter is stable at cold storing conditions for at least about one month.

In certain embodiments, the postharvest plant matter is selected from edible plant matter, plant organ and/or plant tissue. The terms "plant matter", "plant organ" or "plant tissue" are used herein interchangeably. In certain embodiments, the edible plant matter is selected from the group consisting of a fruit and a vegetable having an external skin layer or layers. In certain embodiments the edible plant matter is selected from the group consisting of a fruit and a vegetable coated with protective skin. In specific exemplary embodiments, the edible plant matter comprises garlic or onion bulbs. In other specific exemplary embodiments, the edible plant matter comprises pepper or eggplants. In further specific exemplary embodiments, the edible plant matter comprises tomatoes. Each possibility represents a separate embodiment of the present invention. In some embodiments, the composition is formulated to provide an artificial coating to the postharvest plant matter having a skin.

In certain embodiments, the composition further comprises a natural compound isolated from the surface of said plant matter or a compound substantially equal thereto. In certain embodiments, said compound is a sterol, selected from the group consisting of β-sitosterol, ergosterol, sigmaterol and mixtures thereof. Each possibility represents a separate embodiment of the present invention. In a specific embodiment, said compound is β-sitosterol.

In certain embodiments, the composition further comprises an ethylene retarding agent, such as, but not limited to silver salts, (e.g., silver nitrate, or silver thiosulfate), gibberellins, 2,5-norbomadiene, or trans-cy-dooctene. Each possibility represents a separate embodiment of the present invention.

In some embodiments, the composition further comprises anti-gibberellin compounds, including but not limited to onium compounds; compounds with an N-containing heterocycle; structural mimics of 2-oxoglutaric acid or acyl cyclohexanediones. Specific examples of anti-gibberellin compounds include 16,17-dihydro-gibberellin A5 and derivatives thereof; ethephon (2-chloroethylphosphonic acid) and other ethylene releasing compounds.

In further embodiments, the coating composition comprises about 0.5%-5% (w/w) of gelling hydrocolloid polymer; about 0.1% - 5% (w/w) of edible wax; about 0.01% - 2% (w/w) of fatty acid; about 0.05% - 2% (w/w) of edible alkaline component; and about 83% - 99% water, of the total weight of the wet composition. In still further embodiments, the coating composition comprises about 20%-60% (w/w) of hydrocolloid polymer; about 2% - 35% (w/w) of edible wax; about 1% - 40% (w/w) of fatty acid; about 1% - 30% (w/w) of edible alkaline component; and about 4% - 30% water, of the total weight of the dry composition. In particular embodiments, the hydrocolloid is alginate. In other particular embodiments, the edible wax is beeswax. In further particular embodiments, the fatty acid is oleic acid. In additional particular embodiments, the edible alkaline component is potassium hydroxide.

According to particular embodiments, the hydrocolloid polymer is alginate. According to some embodiments, there is provided a kit comprising the composition for coating a post-harvest plant matter and the composition comprising a cross-linking and/or a gelation-inducing agent, in separate containers. In some embodiments, a cross-linking and/or a gelation inducing agent comprises calcium (Ca⁺⁺), magnesium (Mg⁺⁺), barium (Ba⁺⁺), ferrous (Fe⁺⁺) and/or aluminum (Al⁺⁺⁺) ions. In further embodiments, a cross-linking and/or a gelation-inducing agent comprise calcium or barium ions. Each possibility represents a separate embodiment of the invention.

In certain embodiments, the composition is applied by dipping the plant matter into said composition. In further embodiments, the composition is applied by brushing or by rubbing the composition onto the plant matter surface. In yet further embodiments, the composition is applied by spraying, showering, drenching and/or enrobing. Each possibility represents a separate embodiment of the invention.

According to some embodiments, the composition is applied to the plant matter in a volume of from about 0.5 µl to about 500 µl per about 100 g of the plant matter. According to certain embodiments, the volume of the applied composition is from about 5 µl to about 25 µl.

Exemplary coating composition comprising a formulation selected from Formulations 9-11, 13-21 and 23-24 are described in Table 1 and Formulations 26, 27 and 32 described in Table 3.

Further embodiments and the full scope of applicability of the present invention will become apparent from the detailed description given hereinafter. However, it should be understood that the detailed description and specific Examples, while indicating preferred embodiments of the invention, are given by way of illustration only. The invention shall be defined by the appended set of claims.

### BRIEF DESCRIPTION OF THE DRAWINGS

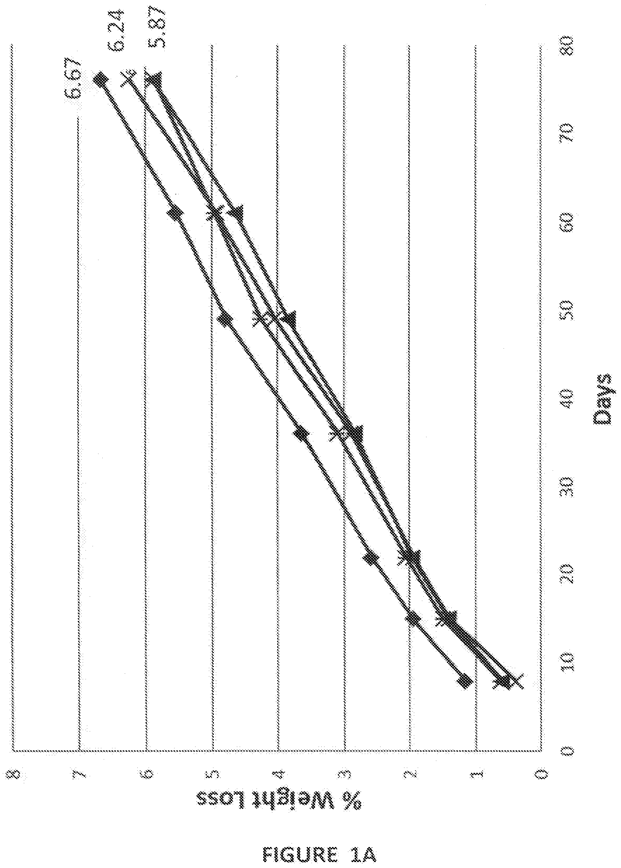

**Figure 1A** is a graph depicting temporal weight losses in fresh garlic bulbs in storage. Changes in weight of control, non-treated garlic bulbs were compared with those of coated garlic bulbs treated with comprising either morpholine or ammonia. Non-coated (◆), coated with Formulation #1 (▲), coated with Formulation #2 (×), coated with Formulation #3 (*).

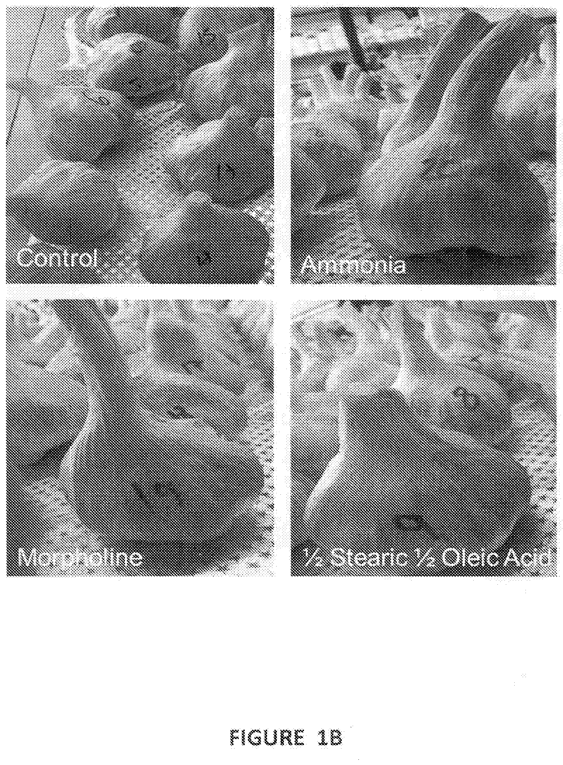

**Figure 1B** shows the actual garlic bulbs used for assays as described in **Figure 1A****.** (**Top left**) - Non-coated, (**Bottom left**) - coated with Formulation #1, (**Top right**) - coated with Formulation #2, (**Bottom right**) - coated with Formulation #3.

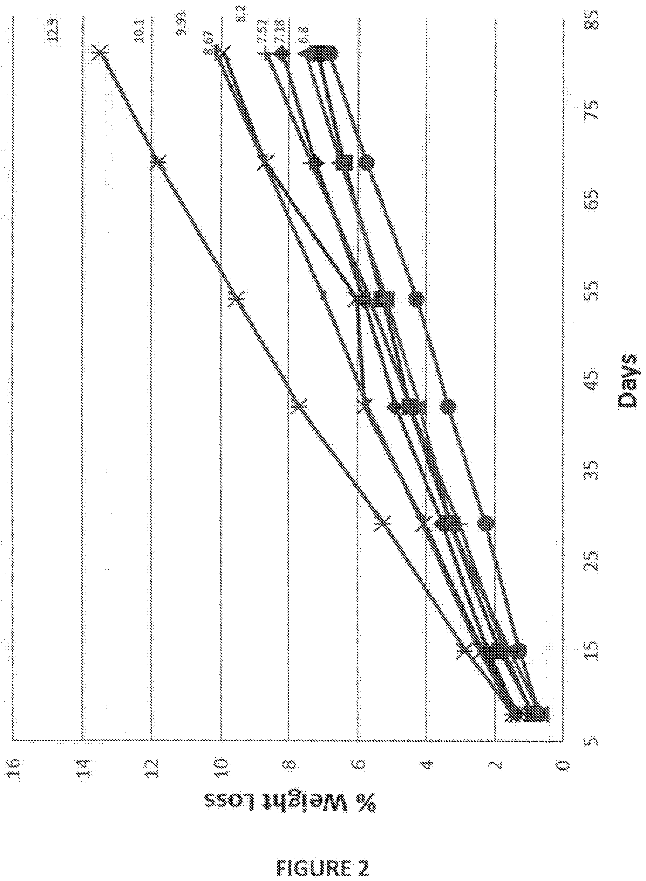

**Figure 2** is a graph depicting the weight change of garlic bulbs in storage with time. Temporal fresh weight measurements of non-treated garlic bulbs were compared with garlic bulbs coated by compositions comprising of beeswax and ammonia at different concentrations, with or without β-sitosterol. All compositions were applied by rubbing onto the external skins of the garlic bulbs. Non-coated (◆), coated with Formulation #2 (■), coated with Formulation #4 (▲), coated with Formulation #5 (×), coated with Formulation #6 (*), coated with Formulation #7 (●), coated with Formulation #8 (+).

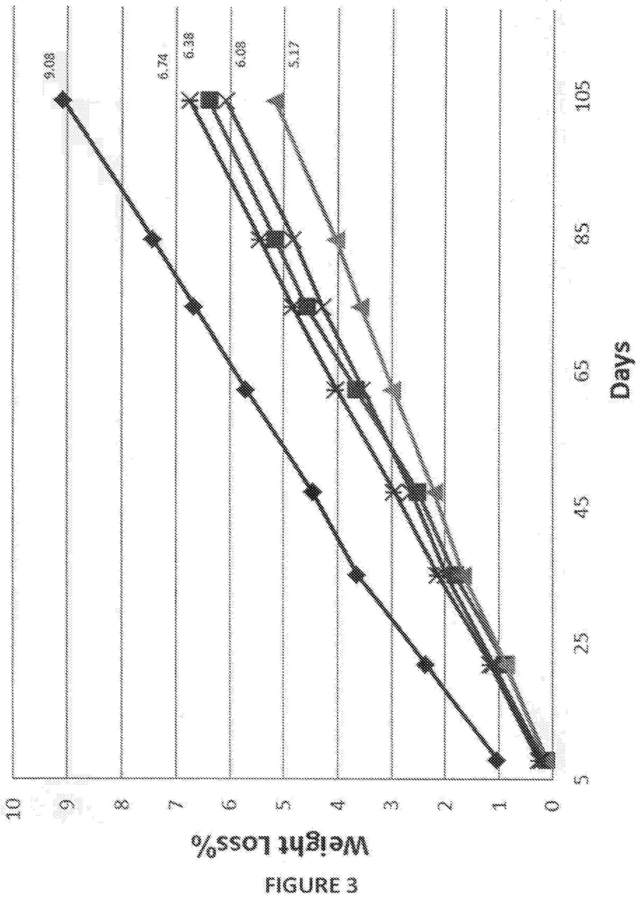

**Figure 3** is a graph depicting the weight change of garlic bulbs in storage as a function of time. Weight losses of control, non-coated garlic bulbs were compared with garlic bulbs coated by compositions comprising ammonia, NaOH, KOH or Na₂CO₃. All coating compositions were adjusted to pH 7.5. Non-coated (◆), coated with Formulation #2 (■), coated with Formulation #9 (▲), coated with Formulation #10 (×), coated with Formulation #11 (*).

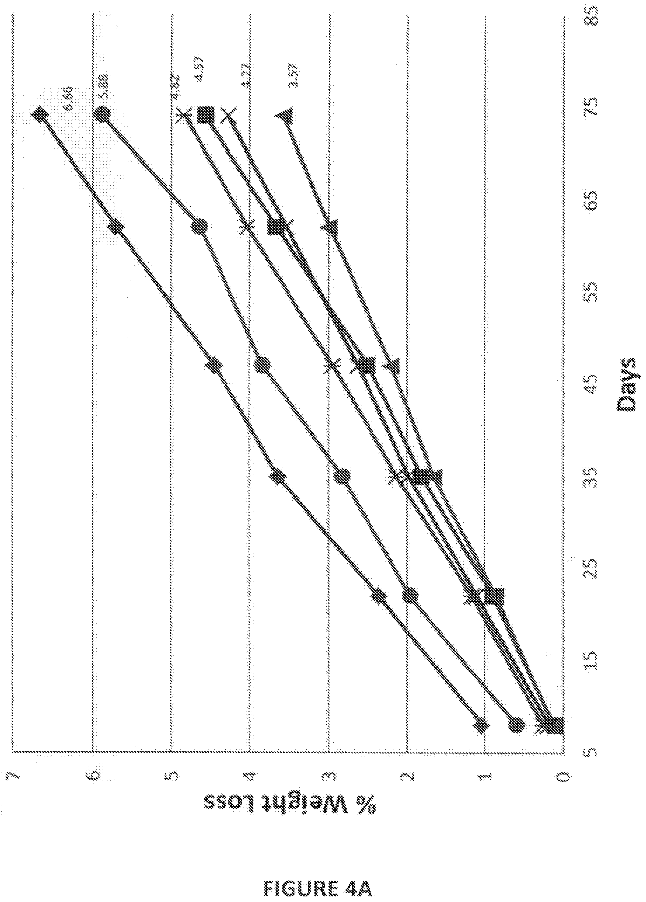

**Figure 4A** is a graph depicting the weight loss of garlic bulbs in storage as a function of time. Garlic bulbs with no coating were compared with garlic bulbs coated by compositions comprising morpholine, ammonia, NaOH, KOH or Na₂CO₃. Non-coated (◆), coated with Formulation #2 (■), coated with Formulation #9 (▲), coated with Formulation #10 (×), coated with Formulation #11 (*), coated with Formulation #1 (●).

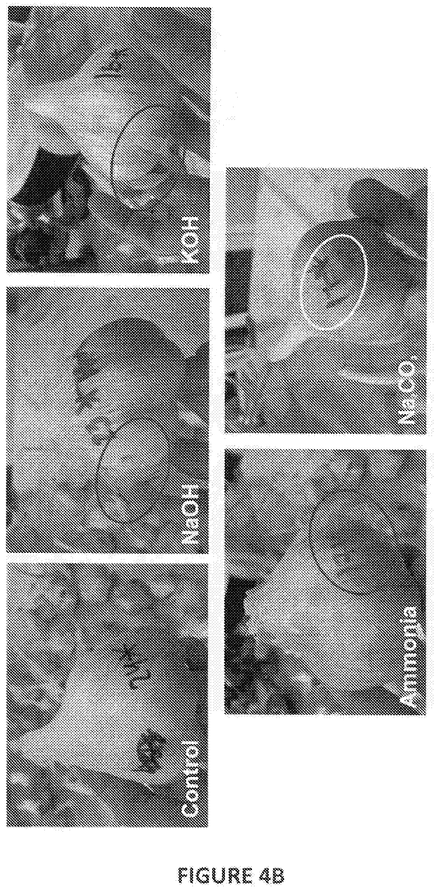

**Figure 4B** shows the actual garlic bulbs treated as in **Figure 4A**. (**Top left**) - Non-coated, (**Top middle**) - coated with Formulation #9, (**Top right**) - coated with Formulation #10, (**Bottom left**) - coated with Formulation #2, (**Bottom right**) - coated with Formulation #11.

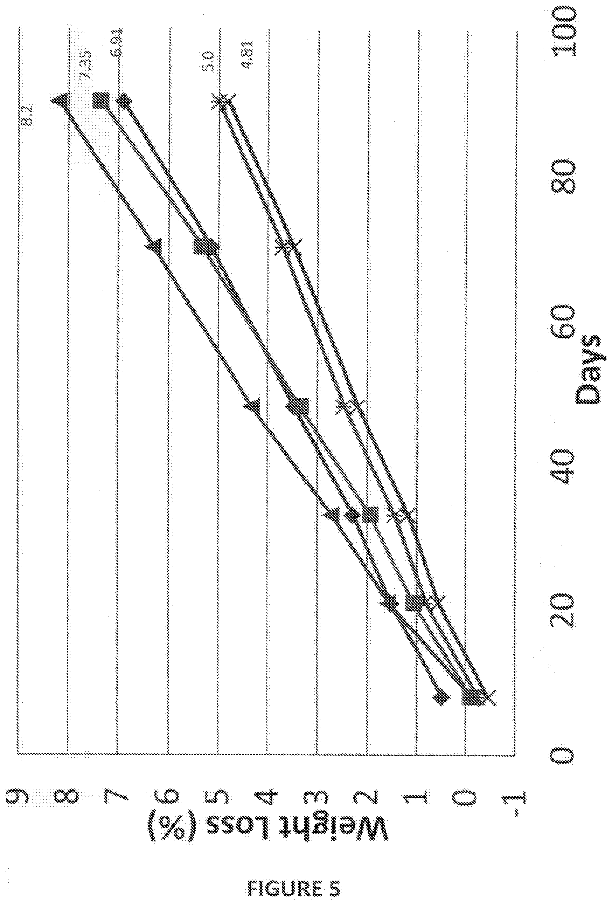

**Figure 5** is a graph depicting the weight loss of garlic bulbs in storage as a function of time. Changes in fresh weight of control, non-coated garlic bulbs were compared with those of coated garlic bulbs coated by compositions comprising ammonia or KOH, with or without β-sitosterol. Non-coated (◆), coated with Formulation #12 (■), also coated with Formulation #12 (▲), coated with Formulation #13 (×), coated with Formulation #14 (*).

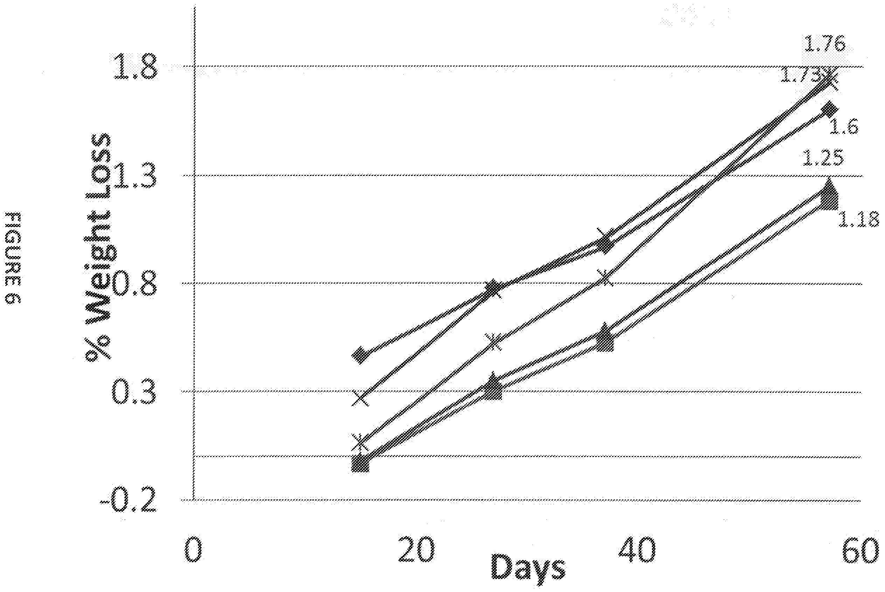

**Figure 6** is a graph depicting the weight loss of garlic bulbs in storage as a function of time. Changes of fresh weight of non-coated garlic bulbs were compared with garlic bulbs coated by compositions comprising a variety of fatty acids. Non-coated (◆), coated with Formulation #10 (■), coated with Formulation #15 (·), coated with Formulation #16 (×), coated with Formulation #17 (*).

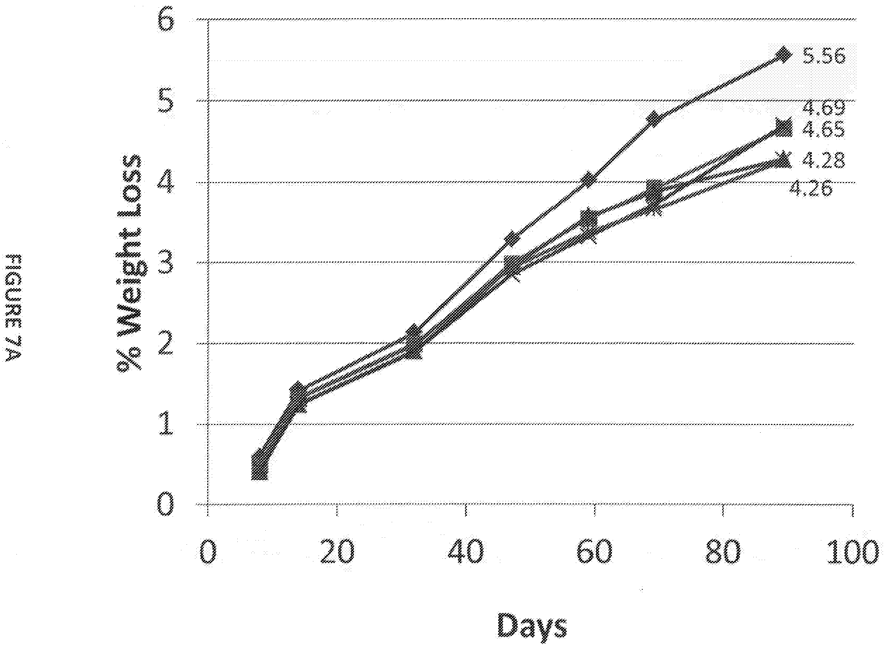

**Figure 7A** is a graph depicting the weight loss of stored bulb onions under ambient room conditions in storage as a function of time. Changes in fresh weight of non-treated bulb onions were compared with stored bulb onions under ambient room conditions coated by compositions comprising ammonia, NaOH, KOH or Na₂CO₃. Non-coated (◆), coated with Formulation #2 (■), coated with Formulation #9 (▲), coated with Formulation #10 (×), coated with Formulation #11 (*).

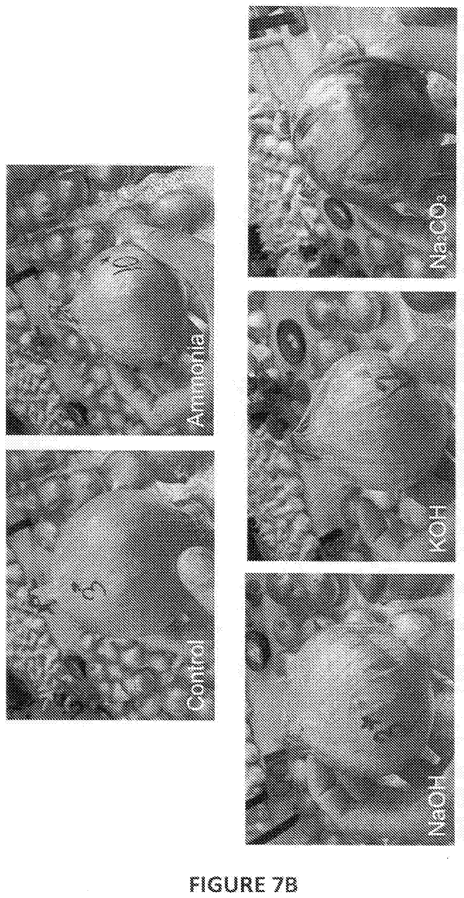

**Figure 7B** shows the actual bulb onions treated as in of **Figure 7A****.** (**Top left**) - Non-coated, (**Top right**) - coated with Formulation #2, (**Bottom left**) - coated with Formulation #9, (**Bottom middle**) -coated with Formulation #10, (**Bottom right**) - coated with Formulation #11.

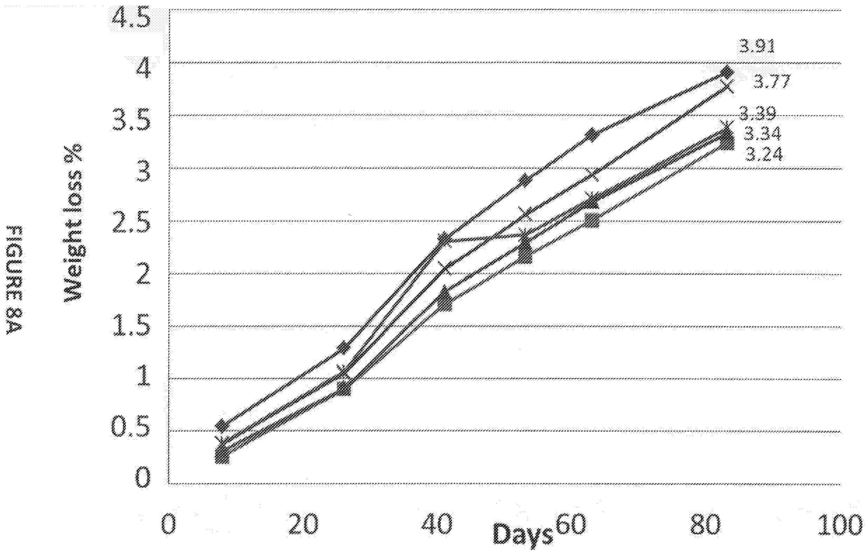

**Figure 8A** is a graph depicting the weight loss of stored bulb onions under ambient room conditions as a function of time. Changes in fresh weight of control non-coated bulb onions were compared with stored bulb onions under ambient room conditions coated by compositions comprising different amounts of beeswax, with or without β-sitosterol. Non-coated (◆), coated with Formulation #18 (■), coated with Formulation #19 (▲), coated with Formulation #20 (×), coated with Formulation #21 (*).

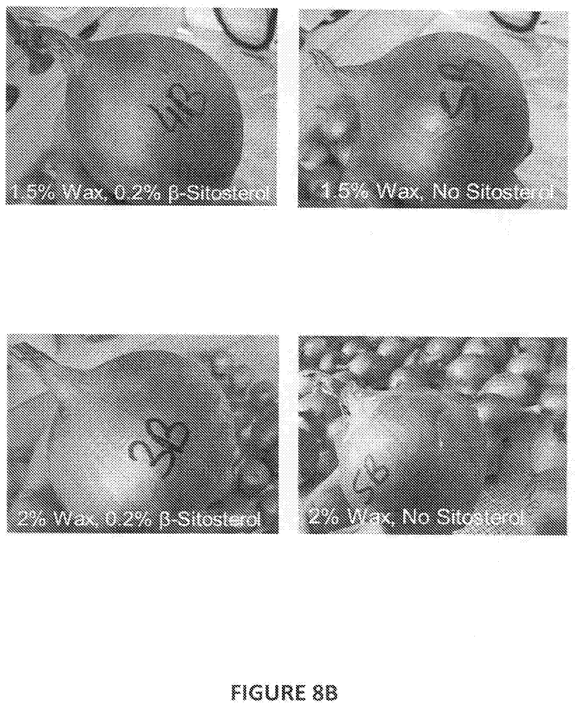

**Figure 8B** shows the actual bulb onions described in **Figure 8A****.** (**Top left**) - coated with Formulation #20, (**Top right**) - coated with Formulation #21, (**Bottom left**) - coated with Formulation #18, (**Bottom right**) -coated with Formulation #19.

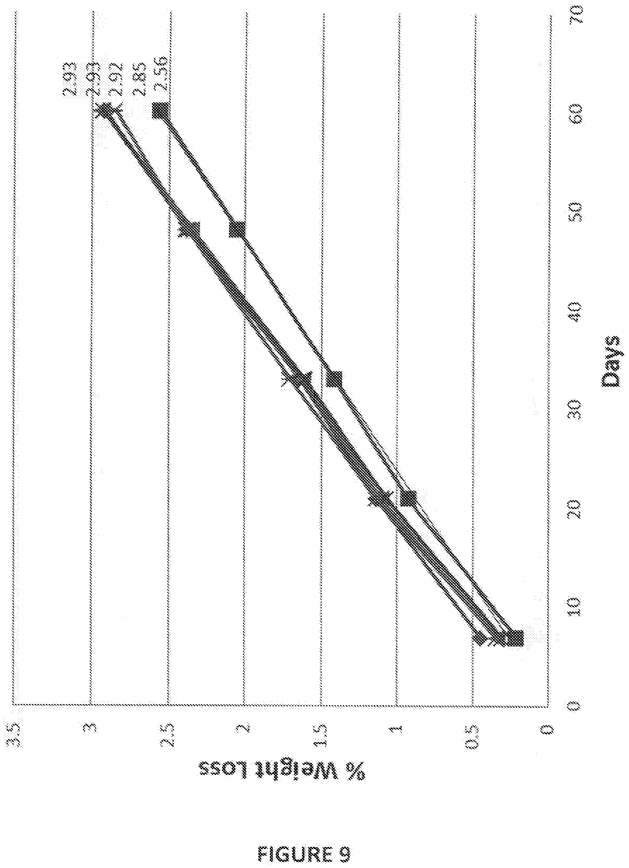

**Figure 9** is a graph depicting the weight loss of bulb onion as a function of time. Changes of fresh weight of control non-coated bulb onions were compared with those of stored bulb onions under ambient room conditions coated by compositions comprising KOH or ammonia, with or without β-sitosterol. Non-coated (◆), coated with Formulation #22 (■), coated with Formulation #12 (▲), coated with Formulation #13 (×).

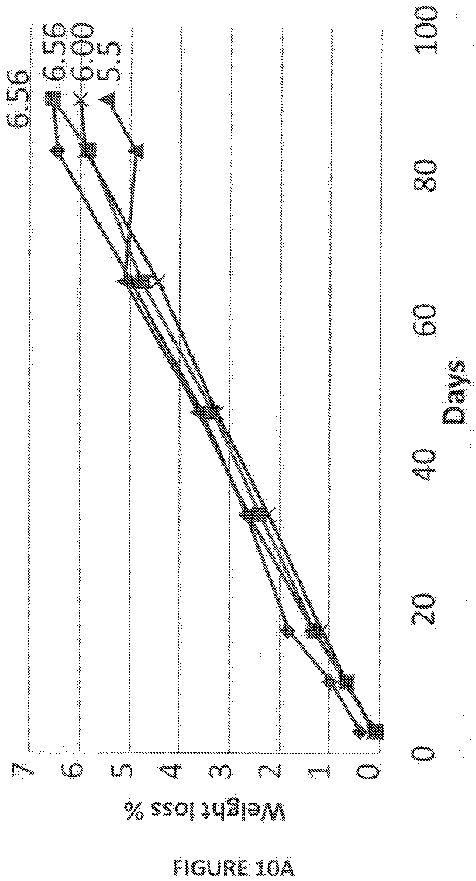

**Figure 10A** is a graph depicting the weight loss of bulb onion as a function of time. Losses in fresh weights of non-coated bulb onions were compared with those of bulb-onions coated by compositions comprising beeswax at a variety of concentrations. Prior to storage, freshly harvested cure bulb onions were coated by dipping in the designated coating composition solutions. Non-coated (◆), coated with Formulation #21 (■), coated with Formulation #23 (▲), coated with Formulation #24 (×).

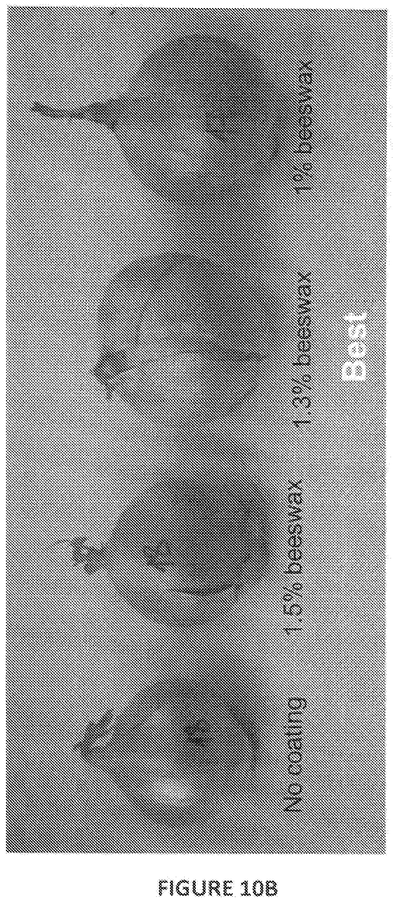

**Figure 10B** is a picture of the actual bulb onions treated as described in **Figure 10A****.** (**Left**) - Non-coated, (**Second to left**) - coated with Formulation #21, (**Second to right**) - coated with Formulation #23, (**Right**) - coated with Formulation #24.

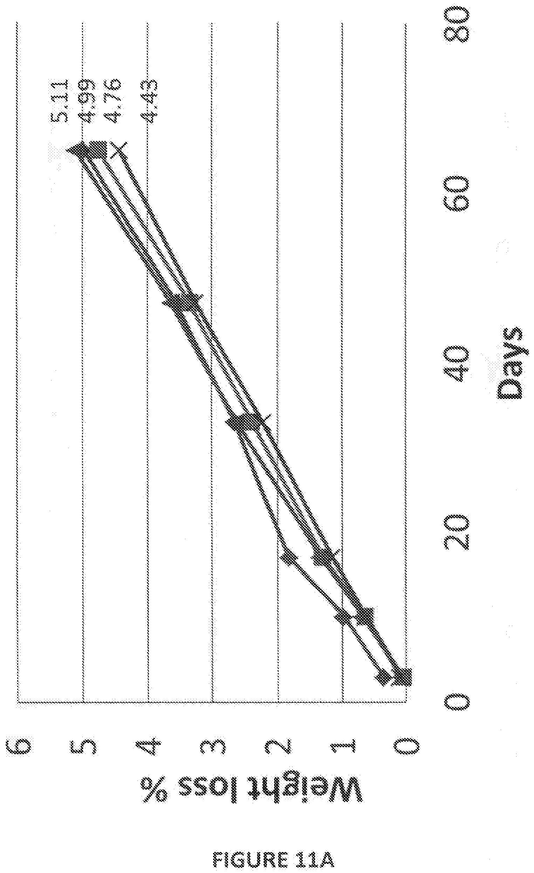

**Figure 11A** is a graph depicting the weight loss of stored bulb onions as a function of time. The weight changes of non-coated bulb onions were compared with those of bulb onions coated by compositions comprising different amounts of beeswax, as in **Figure 10A****.** Prior to storage, freshly harvested cure bulb onions were coated by dipping in coating composition solutions. Non-coated (◆), coated with Formulation #21 (■), coated with Formulation #23 (·), coated with Formulation #24 (×).

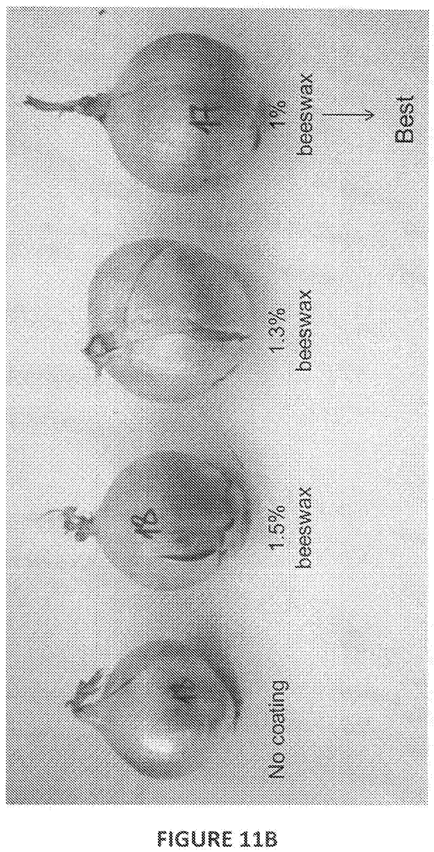

**Figure 11B** shows the actual treated bulb onions described in **Figure 11A****.** (**Left**) - Non-coated, (**Second to left**) - coated with Formulation #21, (**Second to right**) - coated with Formulation #23, (**Right**) - coated with Formulation #24.

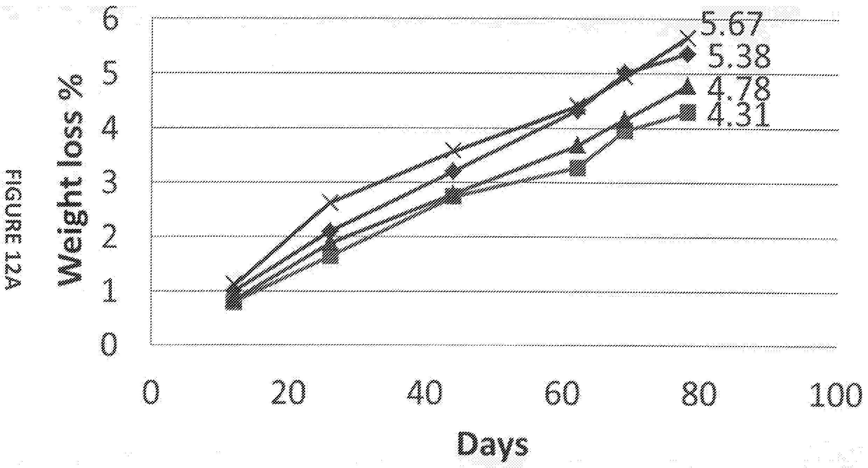

**Figure 12A** is a graph depicting the weight loss of stored bulb onions as a function of time. Losses in fresh weights of control, non-coated bulb onions were compared with those of bulb onions coated by compositions comprising different amounts of beeswax. Prior to storage, freshly harvested cure bulb onions were coated by dipping in coating composition solutions. Non-coated (◆), coated with Formulation #21 (■), coated with Formulation #24 (·), coated with Formulation #25 (×).

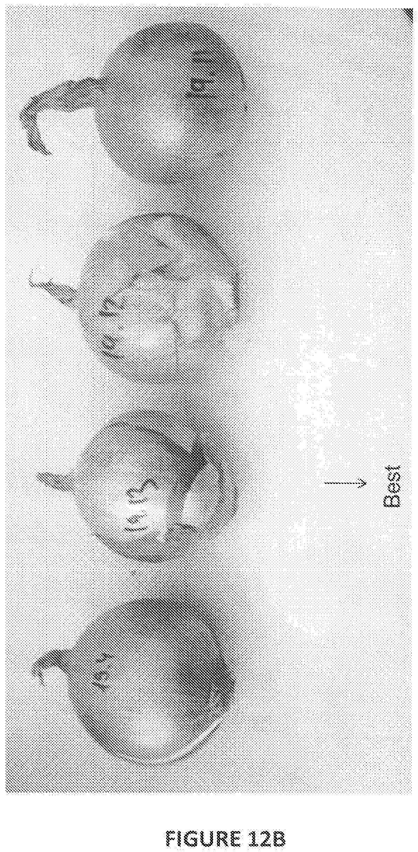

**Figure 12B** shows the actual bulb onions of **Figure 12A****.** (**Left**) - Non-coated, (**Second to left**) - coated with Formulation #21, (**Second to right**) - coated with Formulation #24, (**Right**) - coated with Formulation #25.

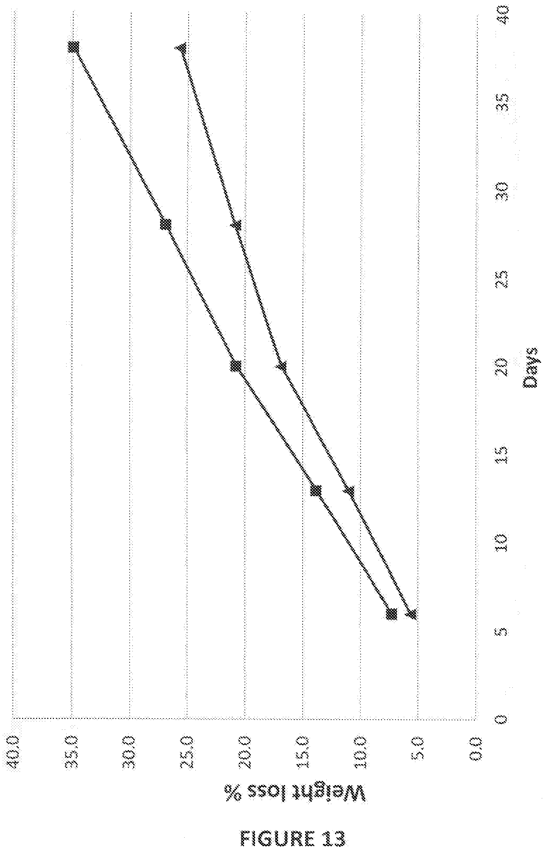

**Figure 13** is a graph depicting the weight loss of stored peppers as a function of time. Losses in fresh weights of control, non-coated peppers were compared with peppers coated by a composition comprising KOH. Prior to storage, freshly harvested cure peppers were coated by dipping in a coating composition solution. Non-coated (■) and coated with Formulation #26 (·).

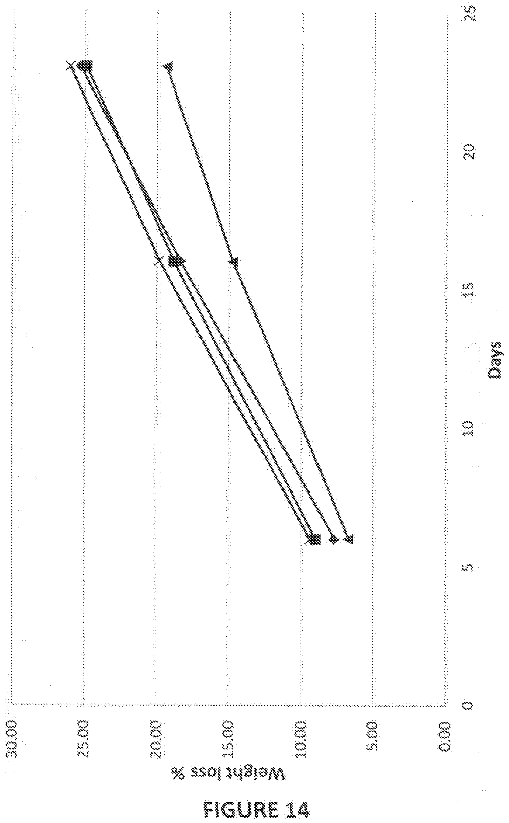

**Figure 14** is a graph depicting the weight loss of stored peppers as a function of time. Losses in fresh weights of control, non-coated peppers were compared with peppers coated by compositions comprising different amounts of beeswax and oleic acid. Prior to storage, freshly harvested cure peppers were coated by dipping in coating composition solutions. Non-coated (◆), coated with Formulation #27 (·), coated with Formulation #28 (×), and coated with Formulation #29 (■).

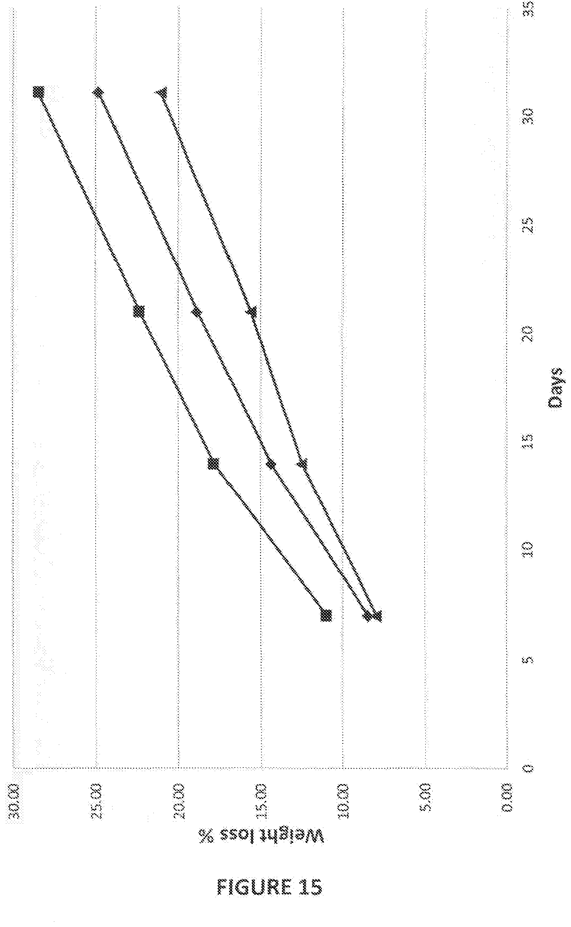

**Figure 15** is a graph depicting the weight loss of stored peppers as a function of time. Losses in fresh weights of control, non-coated peppers were compared with peppers coated by compositions comprising different hydrocolloid polymers_(LBG or CMC). Prior to storage, freshly harvested cure peppers were coated by dipping in coating composition solutions. Non-coated (◆), coated with Formulation #27 (■) and coated with Formulation #30 (▲).

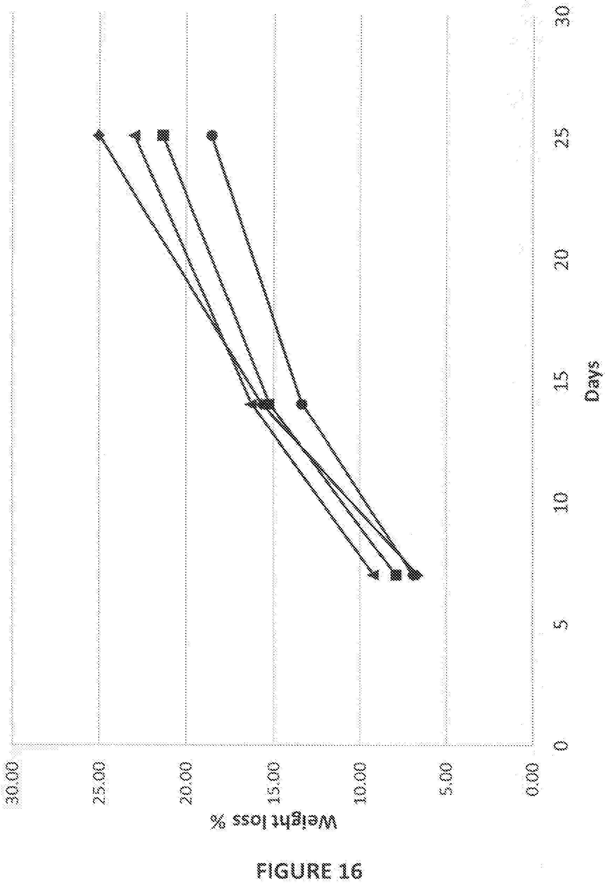

**Figure 16** is a graph depicting the weight loss of stored peppers as a function of time. Losses in fresh weights of control, non-coated peppers were compared with peppers coated by compositions comprising different hydrocolloid polymers_(LBG or guar gum) at a variety of concentrations. Prior to storage, freshly harvested cure peppers were coated by dipping in coating composition solutions. Non-coated (◆), coated with Formulation #27 (■), coated with Formulation #31 (▲) and coated with Formulation #32 (●).

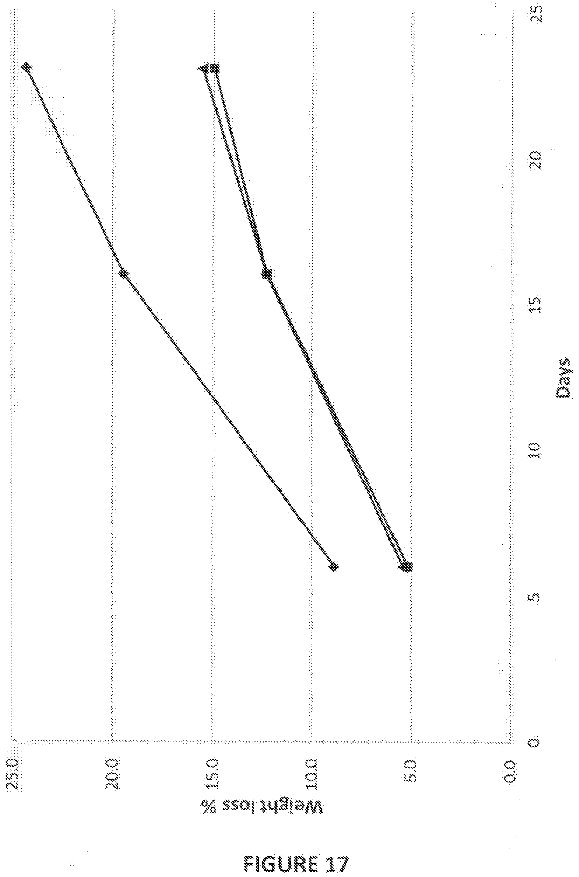

**Figure 17** is a graph depicting the weight loss of stored eggplants as a function of time. Losses in fresh weights of control, non-coated eggplants were compared with eggplants coated by compositions comprising morpholine or KOH. Prior to storage, freshly harvested cure eggplants were coated by dipping in coating composition solutions. Non-coated (◆), coated with Formulation #27 (▲) and coated with Formulation #33 (■).

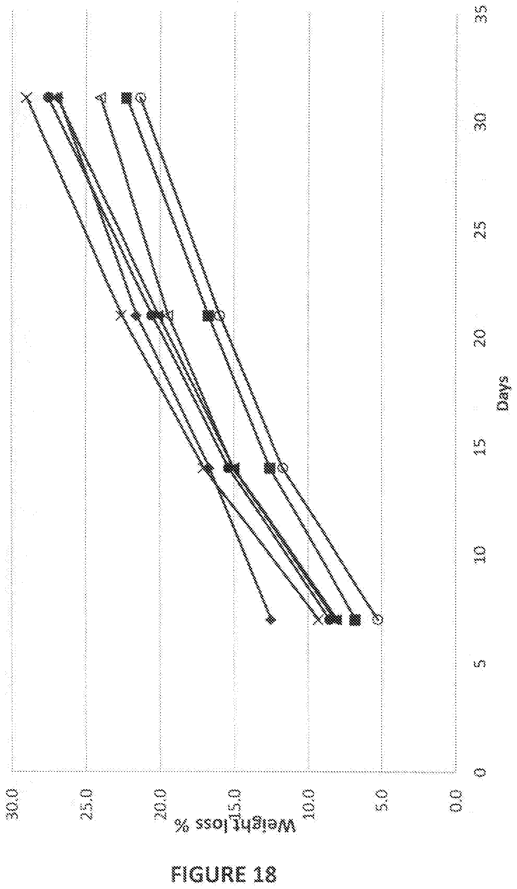

**Figure 18** is a graph depicting the weight loss of stored eggplants as a function of time. Losses in fresh weights of control, non-coated eggplants were compared with eggplants coated by compositions comprising different hydrocolloid polymers_(LBG or CMC). Prior to storage, freshly harvested cure eggplants were coated by dipping in coating composition solutions. Non-coated (◆), eggplant coated with Formulation #27 (■), the pedicel of an eggplant coated with Formulation #27 (●), the eggplant without a pedicel coated with Formulation #27 (∘), eggplant coated with Formulation #30 (Δ), the pedicel of an eggplant coated with Formulation #30 (·) and the eggplant without a pedicel coated with Formulation #30 (×).

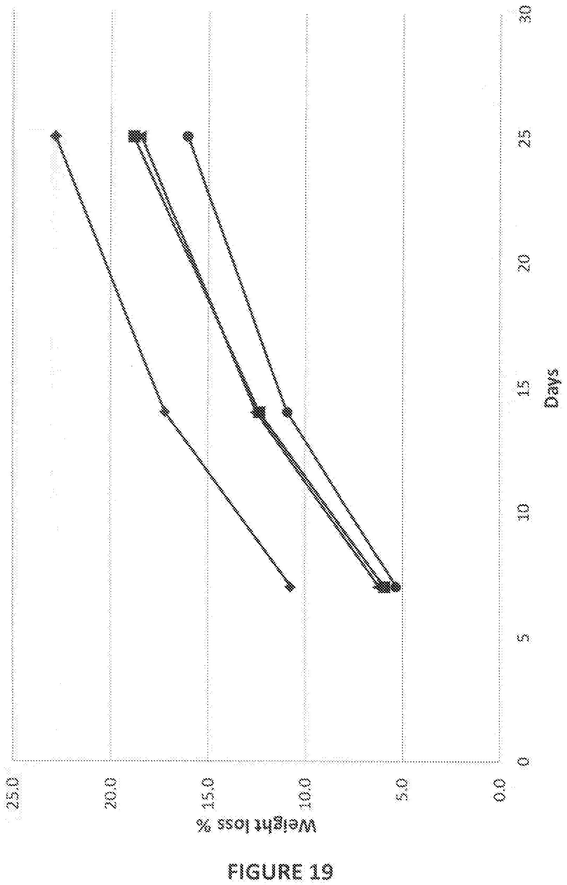

**Figure 19** is a graph depicting the weight loss of stored eggplants as a function of time. Losses in fresh weights of control, non-coated eggplants were compared with eggplants coated by compositions comprising different hydrocolloid polymers_(LBG or Guar gum) at a variety of concentrations. Prior to storage, freshly harvested cure eggplants were coated by dipping in coating composition solutions. Non-coated (◆), coated with Formulation #27 (●), coated with Formulation #31(▲) and coated with Formulation #32 (■).

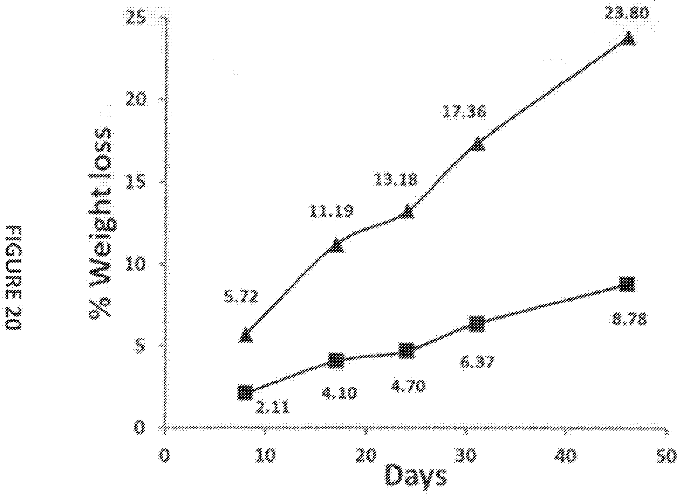

**Figure 20** is a graph depicting the weight loss of stored tomatoes as a function of time. Losses in fresh weights of control, non-coated tomatoes (▲) were compared with tomatoes coated by Formulation #27 (■).

### DETAILED DESCRIPTION OF THE INVENTION

The present application discloses edible hydrocolloid-wax based compositions useful for coating a plant matter, the compositions comprising less than 0.01% (w/w) of morpholine and less than 0.01% (w/w) of any additional emulsifier other than the edible alkaline component. The coating composition of the present invention extends the shelf life of a plant matter coated with the composition by maintaining quality and reducing weight losses by reducing the plant's postharvest water loss or reducing dry matter loss due to respiration and/or modifying the composition of the internal atmosphere of the plant matter. The coating composition may be suitable for providing a gas-permeable coating for preventing and/or retarding food spoilage.

Thus, compositions for coating a postharvest plant matter comprising a hydrocolloid polymer; an edible wax; a fatty acid; water; and an edible alkaline component essentially free of morpholine and/or ammonia are disclosed. In some embodiments, said composition is referred to as a wet composition. In some embodiments, the edible coating is referred to as a dry composition.

The term "wet composition", as used herein refers to a coating composition prior to or following application to the postharvest matter, but prior to drying of the coating composition. The term "dry composition", as used herein refers to a coating composition following application to the postharvest matter and drying.

It has now been found that complete elimination of morpholine and replacing it with edible alkaline components in the coating composition allowed eliminating any safety concerns regarding the use of amine-comprising emulsifiers while increasing the coating compositions ability to reduce weight losses and quality during storage. Therefore, the coating composition of the present invention overcomes the disadvantages of known compositions by using a hydrocolloid-high wax coating which reduces weight and quality losses and does not add a potentially hazardous carcinogen to an otherwise edible plant matter.

Amine-comprising alkaline compounds, such as morpholine, are not approved for human consumption in the European Union due to safety reasons. Edible alkaline component are disclose that are essentially free of morpholine and/or ammonia, the edible alkaline component may be essentially free of amines.

The term "amines", as used herein, refers to compounds containing a basic nitrogen atom having a lone pair of electrons. Amines can be organic or inorganic compounds, and include primary, secondary, tertiary, and cyclic amines. According to certain embodiments, amines include morpholine and/or ammonia.

The term "essentially free of morpholine" in this disclosure refers to an edible alkaline component comprising less than 0.05% (w/w) morpholine of the total weight of the wet composition, less than 0.04% (w/w), less than 0.02% (w/w) or less than 0.01% (w/w) morpholine of the total weight of the wet composition. The term "essentially free of morpholine" refers to an edible alkaline component comprising less than 1% (w/w) morpholine of the total weight of the dry composition, less than 0.5% (w/w), less than 0.1% (w/w), less than 0.05% (w/w), or less than 0.01% (w/w) morpholine of the total weight of the dry composition. The term may also refer to an edible alkaline component not containing detectable amounts of morpholine.

The term "essentially free of ammonia" may refer to an edible alkaline component comprising less than 0.05% (w/w) ammonia of the total weight of the wet composition, less than 0.04% (w/w), less than 0.02% (w/w) or less than 0.01% (w/w) ammonia of the total weight of the wet composition. The term "essentially free of ammonia" may also refer to an edible alkaline component comprising less than 1% (w/w) ammonia of the total weight of the dry composition, less than 0.5% (w/w), less than 0.1% (w/w), less than 0.05% (w/w), or less than 0.01% (w/w) ammonia of the total weight of the dry composition. The edible alkaline component may be free of ammonia. The term may refer to an edible alkaline component not containing detectable amounts of ammonia.

The term "essentially free of amines" may refer to an edible alkaline component comprising less than 0.05% (w/w) amines of the total weight of the wet composition, less than 0.04% (w/w), less than 0.02% (w/w), or less than 0.01% (w/w) amines of the total weight of the wet composition. The term "essentially free of amines" may refer to an edible alkaline component comprising less than 1% (w/w) amines of the total weight of the dry composition, less than 0.5% (w/w), less than 0.1% (w/w), less than 0.05% (w/w), or less than 0.01% (w/w) amines of the total weight of the dry composition. The edible alkaline component may be free of amines. In another embodiment, the term may refer to an edible alkaline component not containing detectable amounts of amines.

The term "composition essentially free of morpholine" may refer to the coating composition comprising less than 0.05% (w/w) morpholine of the total weight of the wet composition, less than 0.04% (w/w), less than 0.02% (w/w), or less than 0.01% (w/w) morpholine of the total weight of the wet composition. The term "composition essentially free of morpholine" may also refer to the coating composition comprising less than 1% (w/w) morpholine of the total weight of the dry composition, less than 0.5% (w/w), less than 0.1% (w/w), less than 0.05% (w/w), or less than 0.01% (w/w) morpholine of the total weight of the dry composition. The coating composition may comprise less than about 5 ppm morpholine. The coating composition may comprise less than about 2 ppm morpholine. The coating composition comprises less than about 1 ppm morpholine. The coating composition may be free of morpholine. The term may also refer to the coating compositions not containing detectable amounts of morpholine.

The composition may be essentially free of ammonia. The term "composition essentially free of ammonia" may refer to the coating composition comprising less than 0.05% (w/w) ammonia of the total weight of the wet composition, less than 0.04% (w/w), less than 0.02% (w/w), or less than 0.01% (w/w) ammonia of the total weight of the wet composition. The term "composition essentially free of ammonia" may refer to the coating composition comprising less than 1% (w/w) ammonia of the total weight of the dry composition, less than 0.5% (w/w), less than 0.1% (w/w), less than 0.05% (w/w) ammonia of the total weight of the dry composition, or less than 0.01% (w/w) ammonia of the total weight of the dry composition. The coating composition may be free of ammonia. The term may refer to the coating compositions not containing detectable amounts of ammonia.

The composition may be essentially free of amines. The term "composition essentially free of amines" may refer to the coating composition comprising less than 0.05% (w/w) amines of the total weight of the wet composition, less than 0.04% (w/w), less than 0.02% (w/w), or less than 0.01% (w/w) amines of the total weight of the wet composition. The term "composition essentially free of amines" may refer to the coating composition comprising less than 1% (w/w) amines of the total weight of the dry composition, less than 0.5% (w/w), less than 0.1% (w/w), less than 0.05% (w/w), or less than 0.01% (w/w) amines of the total weight of the dry composition. The coating composition may be free of amines. The term may also refer to the coating compositions not containing detectable amounts of amines.

An edible alkaline component may allow formation of a homogeneous emulsion without the need for any additional emulsifier. The term "emulsion," as used herein refers to a stable mixture of two or more immiscible components held in suspension. The mixture may be stabilized by the presence of emulsifiers or surfactants. The compositions as disclosed may be essentially free of any additional emulsifier other that the edible alkaline component.

The term "composition essentially free of any additional emulsifier", as used herein, may refer to the coating composition comprising less than 0.05% (w/w) of the additional emulsifier of the total weight of the wet composition, less than 0.04% (w/w), less than 0.02% (w/w), or less than 0.01% (w/w) of the additional emulsifier of the total weight of the wet composition. The term "composition essentially free of any additional emulsifier" may refer to the coating composition comprising less than 1% (w/w) of the additional emulsifier of the total weight of the dry composition, less than 0.5% (w/w), less than 0.1% (w/w), less than 0.05% (w/w), or less than 0.01% (w/w) of the additional emulsifier of the total weight of the dry composition. The coating composition may be free of the additional emulsifier.

According to some embodiments, the coating compositions of the present invention are stable at ambient conditions for at least one month. According to further embodiments, the coating compositions are stable for at least two, three, four, five or even six months. Each possibility represents a separate embodiment of the invention. According to some embodiments, the coating compositions are stable at ambient conditions for more than six months.

According to some embodiments, the coating compositions are stable at cold storage conditions, such as, for example at a temperature of about 0-5°C for at least one month. According to further embodiments, the coating compositions are stable for at least two, three, four, five or even six months. Each possibility represents a separate embodiment of the invention. According to some embodiments, the coating compositions are stable at cold storage conditions for more than six months.

The term "edible alkaline component" as used herein refers to any alkaline material having a pKa and/or pH greater than about 7 and is safe for ingestion by humans.

The edible alkaline component is an alkaline salt. In certain embodiments, the edible inorganic alkaline component is an alkali metal salt or an alkaline earth metal salt. According to some embodiments, the alkali metal salt includes cations selected from sodium or potassium. According to some embodiments the alkaline earth metal salt includes cations selected from magnesium, calcium or barium. According to some embodiments, the edible inorganic alkaline component includes anions selected from hydroxide, carbonate, or bicarbonate. The non-limiting examples of edible inorganic alkaline components include sodium hydroxide, potassium hydroxide, magnesium hydroxide, calcium hydroxide, barium hydroxide, sodium carbonate, potassium carbonate, magnesium carbonate, calcium carbonate, barium carbonate, sodium bicarbonate, potassium bicarbonate, magnesium bicarbonate, calcium bicarbonate, barium bicarbonate or combinations thereof. According to the currently preferred embodiments, the edible inorganic alkaline component is selected from the group consisting of sodium hydroxide, potassium hydroxide, sodium carbonate, potassium carbonate, sodium bicarbonate, potassium bicarbonate, and combinations thereof.

The edible alkaline component is present in a weight percent ranging from about 0.05% to about 2% of the total weight of the wet composition. In certain embodiments, the edible alkaline component is present in a weight percent of 1%. In certain embodiments, the edible alkaline component is present in a weight percent of 2%. In certain embodiments, the edible alkaline component is present in a weight percent of 0.05% or more. In certain embodiments, the edible alkaline component is present in a weight percent of 1% or more. In certain embodiments, the edible alkaline component is present in a weight percent of 2% or less. Each possibility represents a separate embodiment of the present invention.

It should be understood that while the coating composition is applied to the plant matter in the form of a solution, the solution adhered to the plant matter is later dried, i.e. loses at least part of its water content. Therefore, in some embodiments, the edible alkaline component is present in a weight percent ranging from about 1% to about 30% of the total weight of the dry composition. In certain embodiments, the edible alkaline component is present in a weight percent of 1% or more of the dry composition. In certain embodiments, the edible alkaline component is present in a weight percent of 30% or less of the dry composition. In some embodiments, the edible alkaline component is present in a weight percent ranging from about 1% to about 30% of the total weight of the edible coating.

The term "hydrocolloid" as used herein refers to a water-soluble polymer, of biotic, e.g., vegetable, animal, microbial, fossil, or abiotic, i.e., synthetic origin, that generally contains many hydroxyl groups and is capable of increasing the viscosity of the coating layer.

The hydrocolloid is a gelling hydrocolloid. In certain such embodiments, the hydrocolloid is selected from the group consisting of alginate, agar, agarose, gelatin, low methoxy pectin (LMP), chitosan, gellan, carrageenan and mixtures thereof. Each possibility represents a separate embodiment of the present invention. In a specific embodiment, the hydrocolloid is alginate.

The gelling hydrocolloid polymer is present in a weight percent ranging from about 0.5% to about 5% of the total weight of the wet composition. In certain embodiments, the hydrocolloid is present in a weight percent of 0.5% or more. In certain embodiments, the hydrocolloid is present in a weight percent of 5% or less.

In certain embodiments, the gelling hydrocolloid polymer is present in a weight percent ranging from about 20% to about 60% of the total weight of the dry composition. In certain embodiments, the hydrocolloid is present in a weight percent of 20% or more of the total weight of the dry composition. In certain embodiments, the hydrocolloid is present in a weight percent of 60% or less of the total weight of the dry composition. Each possibility represents a separate embodiment of the present invention.

The term "edible wax" as used herein refers to both synthetic waxes that are suitable for human consumption, such as food-grade petroleum products, and to natural waxes obtained from plants, insects (honeybees or others) or animals. Non-limiting Examples of vegetable waxes include candelilla wax, Japan wax, soy wax, castor wax, bayberry wax and mixtures thereof. Each possibility represents a separate embodiment of the present invention. Preferably, the edible wax is selected from animal or insect waxes such as beeswax. The edible wax may further be selected from mineral waxes, such as, but not limited to montan wax or from petroleum waxes, such as but not limited to, microcrystalline wax and paraffin wax. Preferably, the edible wax is selected from waxes having a melting temperature lower than 70°C, such as, but not limited to, beeswax having a melting temperature of between 62-64°C.

In certain embodiments, the edible wax is selected from the group consisting of beeswax, carnauba wax, candelilla wax, alpha wax, montan wax, rice-bran wax, Japan wax and mixtures thereof. In a specific embodiment, the edible wax is beeswax. In certain embodiments, the edible wax has a melting temperature of about 70°C or lower. In certain embodiments, the edible wax is present in a weight percent ranging from about 0.1% to about 5% of the total weight of the wet composition. In certain embodiments, the edible wax is present in a weight percent of 0.1% or more. In certain embodiments, the edible wax is present in a weight percent of 5% or less. In certain embodiments, the edible wax is present in a weight percent of 0.2%, 0.5%, 1%, 1.3%, 2% or 5%. Each possibility represents a separate embodiment of the present invention.

In certain embodiments, the edible wax is present in a weight percent ranging from about 2% to about 35% of the total weight of the dry composition. In certain embodiments, the edible wax is present in a weight percent of 2% or more of the total weight of the dry composition. In certain embodiments, the edible wax is present in a weight percent of 35% or less of the total weight of the dry composition. Each possibility represents a separate embodiment of the present invention. In certain embodiments, the edible wax is present in a weight percent ranging from about 2% to about 35% of the total weight of the edible coating.

In certain embodiments, the fatty acid is selected from the group consisting of oleic acid, stearic acid, palmitic acid, lauric acid, myristic acid, behenic acid, isostearic acid, and mixtures thereof. In a specific embodiment, the fatty acid is oleic acid. In an embodiment, the fatty acid is a mixture of oleic acid and stearic acid. In a specific embodiment, the fatty acid is 50% by weight oleic acid and 50% by weight stearic acid. Each possibility represents a separate embodiment of the present invention.

In some embodiments, the composition further comprises a natural compound isolated from the surface of said plant matter or a compound substantially equal thereto. In some embodiments, addition of said natural compound to the composition induces coating adhesion to the coated plant matter. In other embodiments, the addition of said natural compound allows to retain the natural color of the coated commodity. In certain embodiments, said compound is a sterol. In certain embodiments, said sterol is selected from the group consisting of β-sitosterol, ergosterol, sigmaterol and mixtures thereof. In a specific embodiment, said compound is β-sitosterol. Each possibility represents a separate embodiment of the present invention.

The coating compositions described above is for use in combination with a composition comprising a cross-linking and/or a gelation inducing agent such as, for example, barium ions, potassium ions, calcium ions, magnesium ions, ferrous ions or aluminum ions, capable of causing the jellification of the coating composition. Each possibility represents a separate embodiment of the present invention. The coating composition comprises a gelling hydrocolloid. The coating composition and the composition comprising a cross-linking and/or a gelation-inducing agent are kept in separate containers prior to application of the coating composition to the plant matter. Thus, in some embodiments, there is provided a kit, comprising, as separate components, the coating composition according to the principles of the present invention and the composition comprising a cross-linking and/or a gelation-inducing agent.

Polyamines play important roles in many physiological processes in plants. Treatment with exogenous polyamines has been reported to increase fruit firmness in apples, strawberry, tomato, lemon, peach and plum. Other beneficial effects of exogenous polyamines have been reported for both climacteric and non-climacteric fruit such as delayed color changes, reduced mechanical damage and susceptibility to chilling injury and increased shelf life. Thus, polyamines incorporation in the coating formulations has the potential for control of quality properties and increased shelf life of harvested fruit (Not Sci Biol, 2013, 5(2):212-219).

In some embodiments, the composition further comprises an agent capable of slowing down ripening of the plant organs, such as, but not limited to, aminoethoxyvinylglycine (AVG) or 1-methylcyclopropene (1-MCP). In other embodiments, the coating composition compounds further comprises an ethylene retarding agent as known in the art, such as, but not limited to, silver nitrate, silver applied in the form of thiosulfate, and other silver salts, as well as Gibberellins, 2,5-norbomadiene or trans-cy-dooctene. Each possibility represents a separate embodiment of the present invention.

In some embodiments, the composition further comprises an ethylene releasing agent for regulating (with or without temperature manipulation) the ripening processes of fruit, The non-limiting examples of ethylene releasing agents include calcium carbide, ethanol, methanol, ethylene glycol, ethephon, ethanedial dioxime, etacelasil, 2-chloroethyl-methylbis(phenylmethoxy)-silane, and 1-aminocyclopropane-1-carboxylic acid.

In some embodiments, the composition further comprises an agent capable of slowing down growth and elongation of the plant organs and allow for enhanced ripening, such as, but not limited to anti-gibberellins. Anti-gibberellin compounds may include, but are not limited to, onium compounds; compounds with an N-containing heterocycle; structural mimics of 2-oxoglutaric acid or acyl cyclohexanediones; or 16,17-Dihydro-GA5 and derivatives thereof. The non-limiting examples of onium compounds include chlormequat chloride, mepiquat chloride, chlorphonium, and AMO-1618, which block the cyclases copalyl-diphosphate synthase and ent-kaurene synthase involved in the early steps of GA metabolism. The non-limiting examples of the compounds with an N-containing heterocycle include ancymidol, flurprimidol, tetcyclacis, paclobutrazol, uniconazole-P, and inabenfide. These retardants block cytochrome P450-dependent monooxygenases, thereby inhibiting oxidation of ent-kaurene into ent-kaurenoic acid. Structural mimics of 2-oxoglutaric acid are the co-substrates of dioxygenases that catalyze late steps of GA formation. Acyl cyclohexanediones, e.g. prohexadione-Ca and trinexapac-ethyl and daminozide, block particularly 3β-hydroxylation, thereby inhibiting the formation of highly active GAs from inactive precursors. 16,17-Dihydro-GA5 and related structures act most likely by mimicking the GA precursor substrate of the same dioxygenases. The agent capable of slowing down growth and elongation of the plant organs can thus be selected from 2-chloroethyl trimethyl ammonium chloride (CCC); 2,4-dichlorobenzyl-tributylphosphonium chloride (Phosphon-D); alyl trimethylammonium bromide (AMAB); 2-isopropyl-4-dimethylamino-5methylphenyl-1-piperidine-carboxylate methyl chloride (AMO-1618); (2S,3S)-1-(4-chlorophenyl)-4,4-dimethyl-2-(1,2,4-triazol-1-yl)pentan-3-ol (Paclobutrazol), and the like.

In some embodiments, the edible coating composition further comprises scavengers. The term "scavenger", as used herein, refers to a chemical substance added to a mixture in order to remove or de-activate impurities and unwanted reaction products, for example oxygen and oxygen free radicals (OFR). According to some embodiments, said scavengers are oxygen and OFR scavengers.

The coating composition of the present invention can optionally contain additional substances selected from the group consisting of anti-foaming agents, such as polydimethylsiloxane; preservative agents, such as sorbic acid and its salts, benzoic acid and its salts, calcium propionate, sodium nitrite, sulfites, such as sulfur dioxide, sodium bisulfate or potassium hydrogen sulfite, adhesive agents, such as gelatin and gum karaya, and polycations such as chitosan, plasticizers, such as glycerol, acetylated monoglycerides, polyethylene glycol and surface-tension reducing agents. Each possibility represents a separate embodiment of the present invention. Exemplary additional substances include polydimethylsiloxane (PDMS), sodium bisulfite, sodium benzoate, sodium propionate, calcium propionate, benzoic acid, potassium sorbate, polyethylene glycol, glycerol, propylene glycol, sorbitol, mannitol, and HUMKOTE^{®}. Each possibility represents a separate embodiment of the present invention.

According to the principles of the present invention, the inclusion of additional substances in the coating composition is performed in order to obtain a wax-hydrocolloid coating composition having desired properties such as, but not limited to desired viscosity, plasticity and elasticity, hydrophobicity, permeability, smoothness, glossiness, strength and resistance to shearing forces, pH, and the like. For Example, the additives may provide other characteristics, functions, or properties to the coating composition of the present invention, such as, but not limited to, disinfectant properties.

As explained hereinabove, the compositions as disclosed here extend the shelf life of a plant matter coated with the composition by maintaining quality and reducing weight losses thereof. The coating compositions may provide the extension of shelf life of edible plant matter by modifying the internal atmosphere, by reducing the extent of weight loss and endogenic metabolic and developmental processes, and quality deterioration and spoilage during storage. The coating compositions may provide the extension of the shelf life of the edible plant matter for between several days to several weeks beyond the shelf life of uncoated edible plant matter of the same variety from the same field under the same storage conditions. According to some embodiments, the shelf life of an edible plant matter coated with the coating compositions as disclosed here is at least 20% higher than the shelf life of an uncoated plant matter under the same storage conditions; alternatively, at least 25% higher, alternatively at least 30% higher; alternatively at least 35% higher, alternatively at least 40% higher. According to some embodiments, the shelf life of an edible plant matter coated with the coating compositions as disclosed here is doubled as compared to the shelf life of an uncoated plant matter under the same storage conditions. According to some embodiments, the method of the present invention provides the extension of the shelf life of the non-edible plant matter, including medicinal or ornamental plants for between several days to several weeks beyond the shelf life of uncoated plant matter of the same variety from the same field under the same storage conditions.

In certain embodiments, the plant matter is an edible plant matter. In certain such embodiments, the edible plant matter comprises a fruit or a vegetable, including, but not limited to: storage roots, such as, for example, sweet potato; leaves such as, for example, lettuce; stems, such as, for example, potatoes or kohlrabi; flower initials and buds, such as, for example, cauliflower or broccoli; inflorescence buds such as, for example, artichoke, immature fruits, such as, for example, eggplants, cucumbers; mature fruit, such as, for example, tomatoes; and seeds (for food and for propgation), such as, for example, beans or peas. According to some embodiments the plant matter has natural epidermal layers, also termed herein shell/skin/tunic. The term "fruit or vegetable having a natural shell/skin/tunic" refers to any fruit or vegetable which during its normal growth, maturation and/or ripening develops an external protecting tissue. The external plant tissues are generally coated with some natural coating, for example, leaves are coated with cuticle; tree trunks with bark; fruit with either soft skin as in peaches, dates, apricots, plums, or with thick peel as in oranges, water melons, bananas; dry tunic as in onions and garlic, or hard dry shell as in nuts and certain legumes including peanuts. In some embodiments, the method of the present invention is particularly useful for coating plant matter comprising scale leaves. The non-limiting examples of fruit and vegetable having leaf scales include bulbs, either edible or ornamental, including, *inter alia,* onions, shallots, garlic and bulbs of ornamental plants.

In certain embodiments, the edible plant matter is selected from, but not limited to, garlic, onions, shallots, tomatoes, peppers, eggplants, potatoes, carrot, sweet potatoes, broccolis, cauliflowers, cabbages, zucchinis, parsley, celery, leek, turnip, parsnip, artichoke, salsify, lettuce, apples, strawberries, grapes, blueberries, mango, papaya, kiwis, cantaloupes, melons, watermelons, pineapples and any other fruits or vegetables. In a specific embodiment, the edible plant matter is garlic. In a specific embodiment, the edible plant matter is onions. In a specific embodiment, the edible plant matter is peppers. In some embodiments, the peppers are selected from the group consisting of bell peppers, sweet peppers, chili peppers, and paprika peppers. The peppers can include all stages of fruit development irrespective of size and shape, such as green (immature) and red (mature) and all other in between (e.g., turning point/breaker; pink and more) ripening stages. The peppers can further include peppers of different colors irrespective of size and shape (red, yellow, orange, green, khaki, chocolate/brown, vanilla/white, and purple), shapes and sizes, pungency, sweetness, capsanthin or capsaicin contents, or dry matter contents. In a specific embodiment, the edible plant matter is an eggplant. The eggplant can be of different sizes and colors (e.g., different varieties of eggplant may range from indigo to white including dark violet and forest green). In a specific embodiment, the edible plant matter is shallot, including the gray shallot (Griselle). In a specific embodiment, the edible plant matter is potatoes. In other embodiments, the plant mater is a bulbous geophyte, including but not limited to, tulips, irises, lilies, or daffodils. Additional geophyte species important as medicinal and aromatic plants include anemone, crocus, colchicum, cyclamen, eranthis, fritillaria, galanthus, iris, leucojum, muscari, narcissus, ornithogalu, orchis, arum and scilla.

The method is configured to provide an artificial coating to the postharvest plant matter. In some embodiments, the postharvest plant matter has scales (e.g., bulb onion; shallot). The term "artificial coating" as used herein refers to the plant matters' coating layer, applied by applying the coating composition to the plant matter.

The coating composition is edible.

In some embodiments, the coating composition comprises about 0.5%-5% (w/w) of gelling hydrocolloid polymer; about 0.1% - 5% (w/w) of edible wax; about 0.01% - 2% (w/w) of fatty acid; about 0.05% - 2% (w/w) of edible alkaline component; and about 83% - 99% water, of the total weight of the wet coating composition.

In some embodiments, the coating composition comprises about 0.25%-1.25% (w/w) of gelling hydrocolloid polymer; about 0.05% - 50% (w/w) of edible wax; about 0.01% - 2% (w/w) of fatty acid; about 0.05% - 2% (w/w) of edible alkaline component; and about 50% - 99% water, of the total weight of the wet coating composition.

In some embodiments, the coating composition comprises about 20%-60% (w/w) of gelling hydrocolloid polymer; about 2% - 35% (w/w) of edible wax; about 1% - 40% (w/w) of fatty acid; about 1% - 30% (w/w) of edible alkaline component; and about 4% - 30% water, of the total weight of the dry coating composition. In some embodiments, the edible coating comprises about 20%-60% (w/w) of gelling hydrocolloid polymer; about 2% - 35% (w/w) of edible wax; about 1% - 40% (w/w) of fatty acid; about 1% - 30% (w/w) of edible alkaline component; and about 4% - 30% water, of the total weight of the edible coating.

In some embodiments, the coating composition comprises about 0.5%-5% (w/w) of gelling hydrocolloid polymer; about 0.1% - 5% (w/w) of edible wax; about 0.01% - 2% (w/w) of fatty acid; about 0.05% - 2% (w/w) of edible alkaline component; up to about 0.2% (w/w) of sterol; and about 83% - 99% water, of the total weight of the wet coating composition.

In certain such embodiments, the gelling hydrocolloid polymer is alginate. In certain such embodiments, the edible wax is beeswax. In certain such embodiments, the fatty acid is oleic acid. In certain such embodiments, the edible alkaline component is potassium hydroxide. In certain such embodiments, the edible alkaline component is sodium hydroxide. In certain such embodiments, the edible alkaline component is sodium carbonate. In certain such embodiments, the sterol is sitosterol. Each possibility represents a separate embodiment of the present invention.

In certain embodiments, the coating composition comprising about 1%-5% (w/w) of gelling hydrocolloid polymer; about 0.1% - 5% (w/w) of edible wax; about 0.01% - 2% (w/w) of fatty acid; about 0.05% - 2% (w/w) of edible alkaline component; and about 83% - 99% water, of the total weight of the wet coating composition, is applied to onions. In other embodiments, the coating composition comprising about 1%-5% (w/w) of gelling hydrocolloid polymer; about 0.1% - 5% (w/w) of edible wax; about 0.01% - 2% (w/w) of fatty acid; about 0.05% - 2% (w/w) of edible alkaline component; and about 83% - 99% water, of the total weight of the wet coating composition, is applied to garlic.

In some embodiments, the coating composition comprises about 1%-5% (w/w) of alginate; about 0.1% - 5% (w/w) of beeswax; about 0.01% - 2% (w/w) of oleic acid; about 0.05% - 2% (w/w) of sodium hydroxide; and about 83% - 99% water, of the total weight of the wet coating composition. In additional embodiments, the coating composition comprises about 1%-5% (w/w) of alginate; about 0.1% - 5% (w/w) of beeswax; about 0.01% - 2% (w/w) of oleic acid; about 0.05% - 2% (w/w) of sodium hydroxide; and about 83% - 99% water, of the total weight of the wet coating composition. In a specific embodiment, the coating composition comprises about 2% (w/w) of alginate; about 0.2% (w/w) of beeswax; about 1.8% (w/w) of oleic acid; about 0.12% (w/w) of sodium hydroxide; about 0.2% sitosterol and about 96% water, of the total weight of the wet coating composition.

The present invention provides a method for reducing the weight loss and quality and extending shelf life of a post-harvest plant matter by providing an artificial coating, comprising the step of applying to the surface of the plant matter a coating composition comprising an edible hydrocolloid polymer; an edible wax; an edible fatty acid; water; and an edible alkaline component essentially free of morpholine and/or ammonia, thereby coating the edible plant matter with the coating composition. The method comprises the step of applying to the surface of the plant matter a composition as described above.

According to some embodiments, the coating composition is applied to the surface of the plant matter by rubbing, spraying or brushing the coating composition onto the surface of the plant, possibly by using of rubber, brush or synthetic polymer gloves, brushing onto the plant organs' surface with coating composition; dipping or immersing the edible plant matter in the coating composition, spraying the coating composition onto the edible plant matter, pouring the coating composition onto the plant matter, possibly when the plant matter is handled after harvest, e.g., when manually handled or while moving on a conveyor belt. Each possibility represents a separate embodiment of the present invention. In certain embodiments, the composition is applied by falling film evaporation.

The coating composition may be applied at a certain temperature to provide a substantially uniform coating of the fruit or vegetable. According to some embodiments, the application of the coating composition of the present invention to the surface of the plant matter is performed at room temperature (25°C±10°C). According to some embodiments, the coating composition is applied to the surface of the plant matter when the temperature of the coating composition is between 35°C to 70°C. It will be recognized by one of skill in the art that the coating composition of the present invention is more easily applied in a liquid form. Accordingly, the coating composition may be applied at a temperature in which the edible wax is liquefied or partly liquefied, but at a temperature low enough so that the plants tissues do not suffer injuries.

According to some embodiments, the coating composition is applied to the plant matter in a volume of from about 0.5 µl to about 500 µl of the wet composition per about 100 g of the plant matter. According to certain embodiments, the volume of the applied composition is from about 5 µl to about 25 µl. In certain such embodiments, the plant matter is pepper. In some exemplary embodiments, the volume of the applied composition is about 10 µl.

The method further comprises the steps of allowing the excess coating composition to drip from the plant matter.

The method further includes the steps of applying to the plant matter additional composition comprising cross-linking or gelation inducing agents. The composition comprising cross-linking or gelation inducing agents is applied to the plant matter following the application of the coating composition.

In some embodiments, the cross-linking or gelation inducing agents include barium chloride, calcium chloride magnesium chloride, iron (II) chloride, aluminum chloride or a combination thereof. In some embodiments, the cross-linking or gelation inducing agent is edible. According to some embodiments, the composition comprising the cross-linking or gelation inducing agent is applied to the surface of the plant matter by rubbing, spraying or brushing the composition onto the surface of the plant, possibly by using a rubber, brush or synthetic polymer gloves, dipping or immersing the edible plant matter in the composition, spraying the composition onto the edible plant matter, pouring the composition onto the plant matter, possibly when the plant matter is manually or mechanically handled, e.g., moving on a conveyor belt. Each possibility represents a separate embodiment of the present invention. In certain embodiments, the composition comprising the cross-linking or gelation inducing agent is applied by falling film evaporation.

The method further comprises a drying step. Drying of the coated plant matter is typically performed by allowing the coated plant tissue to dry at room temperature. Alternatively, the coating composition may be left to dry or actively dried after its application to the surface of the plant tissues by any method or under any conditions known in the art at the decision of the one skilled in the art.

According to some embodiments, the thickness of the applied and dried coating is from about 0.1µm to about 10µm. According to the currently preferred embodiments, the thickness of the coating is from about 0.5µm to about 5µm, such as, for example about 1 µm.

In further embodiments, the method comprises a step of brushing of the coated plant tissues. In such embodiments, the brushing allows to maintain or increase the original gloss of the plant tissue.

As used herein, the term "about", when referring to a measurable value such as an amount, a temporal duration, and the like, is meant to encompass variations of +/-10%, more preferably +/-5%, even more preferably +/-1%, and still more preferably +/-0.1% from the specified value, as such variations are appropriate to perform the disclosed methods

As used herein and in the appended claims the singular forms "a", "an" and "the" include plural references unless the content clearly dictates otherwise. It should be noted that the term "and" or the term "or" is generally employed in its sense including "and/or" unless the content clearly dictates otherwise.

The following Examples are presented in order to more fully illustrate some embodiments of the invention. The compositions as applied in the claimed methods are defined by the claims only. Further Examples are included herein in order to better illustrate the principles of the present invention. The Examples should, in no way be construed, as limiting the broad scope of the invention. One skilled in the art can readily devise many variations and modifications of the principles disclosed herein without departing from the scope of the invention.

### EXAMPLES

### Example 1 - Coating of onions and garlic

### Materials and Methods

The coating compositions used throughout the experiments of Examples 2-12 are summarized in Tables 1 and 2, below.

**Table 1. Compositions.**

| # | **Alg*** | **BW*** | **OA*** | **SA*** | **PA*** | **β-sit*** | **Amm*** | **NaOH** | **KOH** | **Na₂CO₃** | **Mor*** |
|---|---|---|---|---|---|---|---|---|---|---|---|
| **1** | 2% | 0.2% | 1.8% | | | 0.2% | | | | | 0.25% |
| **2** | 2% | 0.2% | 1.8% | | | 0.2% | 0.3% | | | | |
| **3** | 2% | 0.2% | 0.9% | 0.9% | | 0.2% | 0.3% | | | | |
| **4** | 2% | 1% | 1.8% | | | 0.2% | 1.5% | | | | |
| **5** | 2% | 2% | 1.8% | | | 0.2% | 3% | | | | |
| **6** | 2% | 5% | 1.8% | | | 0.2% | 75% | | | | |
| **7** | 2% | 0.2% | 1.8% | | | | 0.3% | | | | |
| **8** | 2% | 1% | 1.8% | | | | 1.5% | | | | |
| **9** | 2% | 0.2% | 1.8% | | | 0.2% | | 0.12% | | | |
| **10** | 2% | 0.2% | 1.8% | | | 0.2% | | | 0.15% | | |
| **11** | 2% | 0.2% | 1.8% | | | 0.2% | | | | 1.6% | |
| **12** | 2% | 1% | 0.5% | | | | 0.3% | | | | |
| **13** | 2% | 1% | 1.8% | | | 0.2% | | | 0.15% | | |
| **14** | 2% | 1% | 0.5% | | | | | | 0.15% | | |
| **15** | 2% | 0.2% | 0.9% | 0.9% | | 0.2% | | | 0.15% | | |
| **16** | 2% | 0.2% | 0.9% | | 0.9% | 0.2% | | | 0.15% | | |
| **17** | 2% | 0.2% | 0.9% | 0.45% | 0.45% | 0.2% | | | 0.15% | | |
| **18** | 2% | 2% | 1.8% | | | 0.2% | | | 0.15% | | |
| **19** | 2% | 2% | 0.5% | | | | | | 0.15% | | |
| **20** | 2% | 1.5% | 1.8% | | | 0.2% | | | 0.15% | | |
| **21** | 2% | 1.5% | 0.5% | | | | | | 0.15% | | |
| **22** | 2% | 1% | 1.8% | | | 0.2% | 0.3% | | | | |
| **23** | 2% | 1.3% | 0.5% | | | 0.2% | | | 0.15% | | |
| **24** | 2% | 1% | 0.33% | | | | | | 0.15% | | |
| **25** | 1% | 0.5% | 0.0165% | | | | | | 0.0755% | | |

The percentages are by weight (% w/w). * Alg - alginate; BW - beeswax; OA - oleic acid; SA - stearic acid; PA - palmitic acid; β-sit - β-sitosterol; Amm - ammonia; Mor - morpholine.

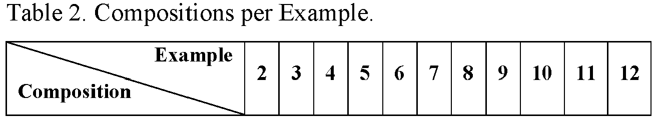

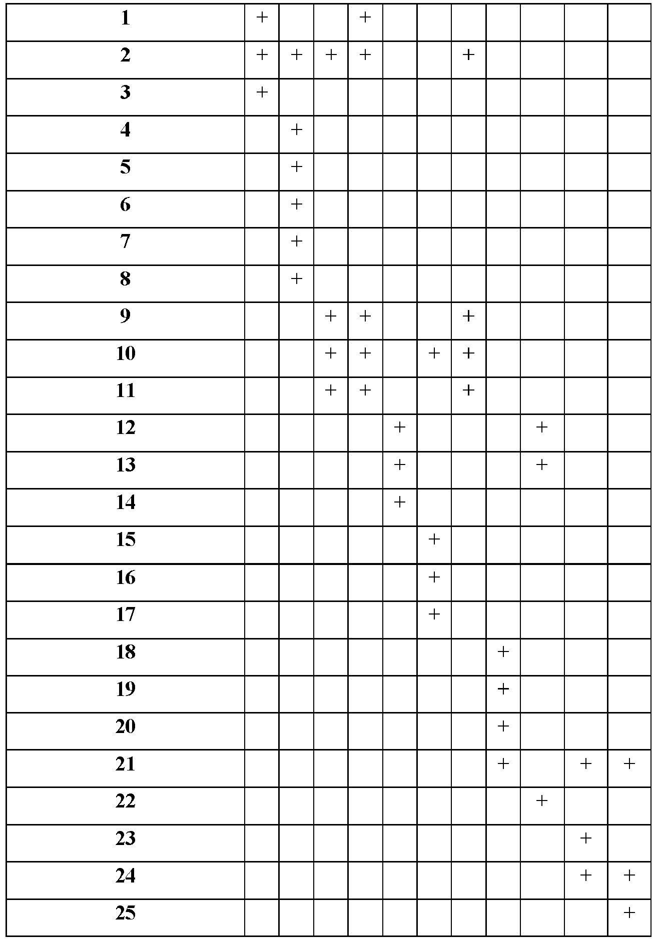

### Formulation preparation

Alginate was dissolved in distilled water, followed by blending/homogenization of fatty acids (e.g. oleic acid, stearic acid, palmitic acid or β-sitosterol). An alkaline component (e.g. KOH, NaOH, ammonia, morpholine or Na₂CO₃) was then added to the solution. The last step included addition of the melted wax. It is important to note that the temperature of the alginate solution was higher than the melting temperature of the wax.

### Formulation application

Freshly harvested onion and garlic bulbs, were cured under ambient conditions for 2-3 weeks as deemed necessary, washed in water and dried gently using very soft paper towels (Hogla, Hadera, Israel). Hydrocolloid-high wax coatings were applied by immersing a bulb in a coating bath comprising a hydrocolloid-high wax coating composition. Residual coating composition was allowed to drip off, before immersing the bulb in a 2% (w/w) solution of calcium chloride for about 30 s to induce a spontaneous cross-linking reaction. Coated bulbs were then left to dry at ambient temperature.

### Weight loss measurement

### Onions

100 bulb onions (`Orlando' HaZera Genetics, Israel) per treatment were used to compare weight-loss rates as a function of the Formulation type. Since weight loss is effected by edible plant size and surface area [Díaz-Pérez et al., J. Sci. Food and Agri., 87, 68-73, 2007], the bulb onions were sorted out to about the same size with an average weight of 100g. Individual bulbs were weighed (±0.01 g) daily for 7 days using a STANDARD Series 165 BJ1000C balance (Precisa Gravimetrics AG, Dietikon, Switzerland). The scale was attached to a computer and data were collected using BALINT V5.00 software (Balance interface for Windows, Precisa Instruments AG, Dietikon, Switzerland). Results are presented as average (W₀-Wₜ) × 100/W₀, where W₀ is the weight at time zero (i.e. initial weight) and Wt is the onion's weight after elapsed time t. All onions were stored at 21°C and 50% RH. The vapor pressure deficit (VPD), which is the difference between the amount of moisture in the air and the amount of moisture the air can hold when saturated, was 1.24 kPa. Pictures of the bulb onions were taken during storage using a digital camera (Nikon Coolpix 600, Tokyo, Japan).

### Garlic

Garlic bulbs (` Shani'), raised from a virus free clonally propagated material that were raised under protection to prevent contamination and infection with pests, including viruses, were used to compare weight-loss rates as a function of the edible alkaline component type in Formulations. The garlic bulbs were sorted for size thus having an average weight of 60±10 g. Each garlic bulb was weighed (±0.01 g) daily for at least 7 days using a STANDARD Series 165 BJ1000C balance (Precisa Gravimetrics AG, Dietikon, Switzerland). The scale was attached to a computer and data were collected using BALINT V5.00 software (Balance interface for Windows, Precisa Instruments AG, Dietikon, Switzerland). Results are presented as average (W₀-Wₜ) × 100/W₀, where W₀ is the weight at time zero (i.e. initial weight) and Wt is the garlic's weight after elapsed time t. All garlic bulbs were stored at 21°C and 50% RH. The vapor pressure deficit (VPD), which is the difference between the amount of moisture in the air and the amount of moisture the air can hold when it is saturated, was 1.24 kPa. Pictures of the garlic bulbs were taken during storage using a digital camera (Nikon Coolpix 600, Tokyo, Japan).

### Example 2: Weight loss - comparison of morpholine with ammonia

To test the effect of morpholine replacement in the coating formulation with ammonia, control garlic bulbs were left uncoated and the change in their fresh weight was compared with that of garlic bulbs coated with Formulations #1-#3 detailed in Table 1. The bulbs' weight loss was followed for about three months and the data presented in Figure 1A, shows clearly that coating with either of Formulations #1-#3 resulted in reduced bulbs' weight losses by about 12% compared to the non-coated bulbs. The experiment teaches that 0.25% morpholine (Formulation #1) can be replaced with 0.3% ammonia (Formulation #2), and that 50% of the oleic acid can be replaced with stearic acid (Formulation #3), with little effect on the formulations' efficacy.

It is therefore concluded that when weight loss reduction is concerned, morpholine and ammonia perform as equivalent alkaline components, and that oleic acid and steric acid perform as equivalent fatty acids, and that the replacement of morpholine with ammonia had essentially no effect on the coating efficiency of garlic bulbs. It is important to note that all coatings produced by Formulations #1-#3 eventually came off and fall away from the garlic bulbs' tunics, and that Formulation #3 produced the least sticky/oily coat than the others.

### Example 3: Weight loss - effect of wax and ammonia content

To test the effect of different beeswax and ammonia concentrations on coating Formulations' ability to slow down weight loss of coated produce (with or without β-sitosterol), garlic bulbs were left uncoated, or were coated with Formulations #2 and #4-#8 detailed in Table 1 (all with a wax:ammonia 2:3 weight ratio), and the bulbs' weight loss was followed for about three months. The data presented in Figure 2 teaches that 0.2% beeswax and 0.3% ammonia effectively slow down the bulb's weight loss for up to about 17% compared to uncoated bulbs (Formulations #2 and #7), and that increasing said concentrations to 1% and 1.5%, respectively, necessitates the use of β-sitosterol to retain efficacy (Formulation #4). Further increasing the concentrations of wax and ammonia has a negative effect and in fact increases the bulb's weight loss (Formulations #5, #6 and #8).

Interpreted together with the experimental data provided in Example 1, it is concluded that coating formulations comprising ammonia instead of morpholine are of limited value and potency, as they are limited to low concentrations of wax and ammonia, and decrease garlic weight loss during storage by only 17%.

### Example 4: Weight loss - comparison of ammonia with other alkaline components

Since replacing morpholine with ammonia does not produce any substantially improved coating Formulations as demonstrated in Example 3, the effect of other alkaline components such as NaOH, KOH and Na₂CO₃ was also tested. To test the potency of said alkaline components in coating Formulations, garlic bulbs were left uncoated, or were coated with Formulations #2 and #9-#11 detailed in Table 1, and the temporal bulbs' weight loss in storage was followed for about three and a half months (all coating solutions were adjusted to pH 7.5). The data presented in Figure 3 demonstrates that ammonia-based and sodium carbonate-based formulations (Formulations #2 and #11, respectively) reduced the weight loss of the coated bulbs' by about 30% compared to uncoated bulbs. However, Formulations #9 and #10 comprising NaOH and KOH, respectively, further reduced the weight loss of the coated bulbs' in storage by about 13% and 3%, respectively. Compared to Formulation #2, Formulations #9 and #10 were 43% and 33% more effective in reduced the coated bulbs' weight loss.

It is therefore evident that the use of an inorganic alkaline components such as an alkali metal salts or an alkaline earth metal salts instead of morpholine or any similar amine containing alkaline components in coating formulations for edible produce gives way to more efficacious and safer coating formulations.

### Example 5: Weight loss - comparison of morpholine with other alkaline components

Further to the experimental data presented in Example 4, Formulations #2 and #9-#11 were directly compared with Formulation #1, which comprises morpholine. To test the potency of said formulations, garlic bulbs were left uncoated, or were coated with Formulations #1, #2 or #9-#11 detailed in Table 1, and the temporal bulbs' weight loss was followed for about two and a half months. The data presented in Figure 4A is similar to the data shown in Figure 3, with the exception that Formulation #1, which comprises morpholine as an alkaline component, is clearly inferior to all other Formulations comprising alternative alkaline components. As evident in Figure 4B, Formulation #11 comprising Na₂CO₃ as alkaline component, produced a coat which remained attached longer and stronger to the treated plants' surface than the coatings produced by other Formulations used, albeit said coating visibly stained the garlic bulb.

It is therefore evident that the use of edible alkaline components instead of morpholine allows not only for reduced health hazards of the coating materials but to increase the protective efficiency of the coating.

### Example 6: Weight loss - comparison between ammonia and KOH as an alkaline component

The experimental data provided in Examples 4 and 5 suggests that while the NaOH-based coating Formulation (Formulation #9) is far superior to the ammonia-based coating formulation (Formulation #2), the KOH-based coating formulation (Formulation #10) provides only modest improvement over ammonia containing formulation. This data is slightly counter-intuitive since chemically speaking both NaOH and KOH have very similar attributes. To explore this discrepancy, garlic bulbs were left uncoated, or were coated with Formulations #12-#14 described in Table 1, and the temporal bulbs' weight loss was followed for about three months. The data presented in Figure 5 teaches that while ammonia-based formulation (Formulation #12) was ineffective in slowing down weight loss, KOH-based formulations were effective in reducing weight loss of the coated bulbs' by about 31% compared to uncoated bulbs (Formulation #14) or by about 28% when sitosterol was excluded (Formulation #13).

It is therefore evident that the use of KOH as an alkaline component in coating Formulations for edible produce is of comparable efficacy to NaOH-based formulations. The fact that Formulation #10 in Examples 4 and 5 did not perform as well as formulations #13 and #14 tested herein may be attributed to the significant difference in beeswax content in said formulations, wherein Formulations #13 and #14 comprise 1% beeswax, which is five times the beeswax content in Formulation #10 (0.2%).

### Example 7: Weight loss - comparison between different fatty acids

The incorporation of fatty acids in the coating formulations provided herein is essential for dissolving the edible wax component, e.g. beeswax. To test the potency of different fatty acids in coating formulations, garlic bulbs were left uncoated, or were coated with Formulations #10 and #15-#17 detailed in Table 1, and the temporal bulbs' weight loss was followed for about two months. The data presented in Figure 6 shows that Formulations #10 and #15 (comprising 1.8% oleic acid or a combination of 0.9% oleic acid and 0.9% stearic acid, respectively) slowed down the coated bulbs' weight loss by about 27% and about 22%, respectively, compared to uncoated bulbs. In addition, Formulation #17 (comprising 0.9% oleic acid, 0.45% stearic acid and 0.45% palmitic acid) significantly reduced the coated bulbs' weight loss.

It is therefore evident that while the use of a fatty acid such as oleic acid is mandatory to promote wax solubilization, the use of fatty acids combinations is also applicable and may be favorable, for example when such combinations are preferred in view of certain technical considerations.

### Example 8: Weight loss - comparison between ammonia and other alkaline components

Coating Formulations #2 and #9-#1 1 were also tested for their effect on loss of weight in stored bulb onions. To test the potency of said Formulations, bulb onions were left uncoated, or were coated with Formulations #2 and #9-#11 detailed in Table 1, and the temporal bulbs' weight loss was followed for about three months. The data presented in Figure 7A shows that all Formulations were substantially effective, reducing the bulb onions' weight loss by about 16% (Formulations #2 and #10 comprising ammonia and KOH, respectively) to about 24% (Formulations #9 and #11 comprising NaOH and Na₂CO₃, respectively).

It is therefore evident, as in Example 4, that the use of an inorganic salt such as an alkali metal salt or an alkaline earth metal salt instead of morpholine or any similar amine containing alkaline components in coating formulations for edible produce gives way to more efficacious and safer coating formulations.

### Example 9: Weight loss - the effect of wax and sitosterol content

To test the effect of different beeswax and β-sitosterol concentrations on coating formulations ability to slow down weight loss of coated produce, bulb onions were left uncoated, or were coated with Formulations #18-#21 detailed in Table 1, and the temporal onions' weight loss was followed for about three months. The data presented in Figure 8 shows that a formulation of 2% beeswax and 0.2% β-sitosterol effectively slows down the onions' weight loss by about 18% compared to uncoated onions (Formulation #18), and that lowering the wax's concentrations to 1.5% (Formulation #20), exclusion of β-sitosterol (Formulation #19) or both (Formulation #21) have a negative effect on the formulations' efficacy. It should be noted that all formulations produced oily coats, which adhered well to the onions, wherein the coat produced by Formulation #20 was less oily at touch.

Interpreted together with the experimental data provided in Example 6, it is concluded that coating formulations comprising both beeswax and β-sitosterol significantly and effectively slow down onions' weight loss.

### Example 10: Weight loss - comparison between ammonia and KOH as an alkaline component

To test the efficacy of ammonia and KOH as alkaline components in coating Formulations for bulb onions, bulbs were left uncoated, or were coated with Formulations #12, #13 and #22 detailed in Table 1, and the temporal bulb onions' weight loss was followed for about two months. The data presented in Figure 9 shows that while an ammonia-based Formulation comprising sitosterol was effective in slowing down weight loss (Formulation #22), a sitosterol-free ammonia-based formulation was not effective (Formulation #12). Surprisingly, Formulation #13, comprising sitosterol and KOH, was not effective as well, which stands in contrast to its efficacy as demonstrated in Example 6 above.

### Example 11: Weight loss - the effect of wax and sitosterol content

To further test the effect of different beeswax and β-sitosterol concentrations on coating Formulations ability to slow down weight loss of coated produce, bulb onions were left uncoated, or were coated (by dipping) with Formulations #21, #23 and #24 detailed in Table 1, and the temporal bulb onions' weight loss was followed for about three months. The data presented in Figure 10A teaches that a sitosterol-free formulation comprising 1.5% and 1% beeswax effectively slowed down the onions' weight loss for up to about 9% compared to uncoated onions (Formulations #21 and #24, respectively), while a formulation comprising a beeswax's content of 1.3% with 0.2% sitosterol has an increased efficacy (Formulation #23).

In repeating the above experiment, this time following the temporal bulb onions' weight loss for about two months, Formulation #24 (comprising 1% beeswax and no sitosterol) was found most effective (see Figure 11A). It is therefore concluded that coating Formulations comprising 1%-1.5% beeswax effectively slow down onions' weight loss.

### Example 12: Weight loss - the effect of wax content

To further explore the effect of beeswax concentration on coating formulations ability to slow down weight loss of coated produce, bulb onions were left uncoated, or were coated (by dipping) with Formulations #21, #24 and #25 detailed in Table 1, and the temporal bulb onions' weight loss was followed for about three months. The data presented in Figure 12A teaches again that the formulations comprising 1.5% and 1% beeswax effectively slow down the bulb onions' weight loss for up to about 20% compared to non-coated onions (Formulations #21 and #24, respectively), while a formulation comprising a beeswax's content of 0.5% has lower efficacy (Formulation #23).

It again becomes apparent that coating formulations comprising 1%-1.5% beeswax effectively slow down onions' weight loss.

### Example 13 - Coating of peppers, eggplants and tomatoes

### Materials and Methods

The coating compositions used throughout the experiments of Examples 14-21 are summarized in Tables 3 and 4, below.

**Table 3. Compositions.**

| # | **LBG*** | **CMC*** | **GG*** | **BW*** | **OA*** | **KOH** | **Mor*** |
|---|---|---|---|---|---|---|---|
| **26** | 0.5% | | | 15% | 1.8% | 0.4% | |
| **27** | 0.5% | | | 15% | 1.8% | 0.54% | |
| **28** | 0.5% | | | 12% | 1.8% | 0.54% | |
| **29** | 0.5% | | | 15% | 1.44% | 0.54% | |
| **30** | | 1% | | 15% | 1.8% | 0.54% | |
| **31** | | | 0.5% | 15% | 1.8% | 0.54% | |
| **32** | | | 0.5% | 17.5% | 1.8% | 0.54% | |
| **33** | 0.5% | | | 15% | 1.8% | | 1.5% |

The percentages are by weight (% w/w). * LBG - locust bean gum; CMC - carboxymethyl cellulose; GG - guar gum; BW - beeswax; OA - oleic acid; Mor - morpholine.

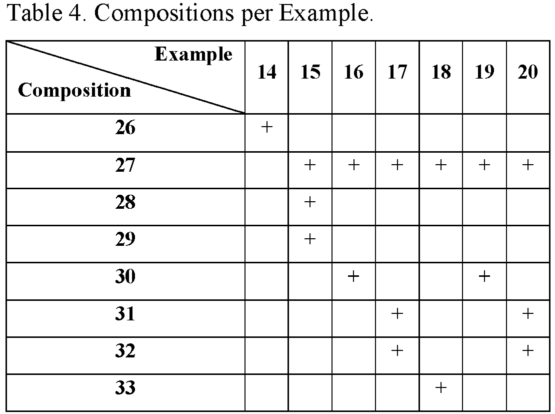

### Formulation preparation and application

A hydrocolloid (e.g. locust bean gum, guar gum or carboxymethyl cellulose) was dissolved in distilled water preheated to 90°C, followed by blending/homogenization of a mixture of a fatty acid (e.g. oleic acid, stearic acid, palmitic acid or β-sitosterol) and an alkaline component (e.g. KOH, NaOH, ammonia, morpholine or Na₂CO₃). The last step included addition of the above mixture to the melted wax. The final mixture was homogenized for 3 min at 16,000 rpm and then cooled to room temperature. A layer of said mixture was applied to peppers eggplants, and/or tomatoes.

### Weight loss measurement

The weight loss measurements for red peppers and eggplants were carried out as described in Example 1.

### Example 14: The effect of KOH on peppers weight loss

To test the effect of KOH in the coating formulation, control red peppers were left uncoated and the change in their fresh weight was compared with that of peppers coated with Formulation #26 as detailed in Table 3. The peppers' weight loss at ambient storage conditions was followed for about one and half month. As shown in Figure 13, the coating with Formulation #26 comprising KOH resulted in reduced peppers' weight loss by about 9% compared to the non-coated peppers. Thus, the use of inorganic alkaline components such as an alkali metal in coating formulations for peppers gives way to more efficacious and safer coating formulations.

### Example 15: Weight loss - effect of wax and fatty acid content

The effect of different beeswax and oleic acid concentrations on coating formulations' ability to slow down weight loss of coated produce was examined. Red peppers were left uncoated, or were coated with Formulations #27, #28 and #29 detailed in Table 3. The peppers' weight losses were followed for about three and a half weeks. The data presented in Figure 14 teaches that Formulation #27 (comprising 15% beeswax and 1.8% oleic acid) was found most effective in reducing the coated pepper's weight loss as compared to Formulation #28 and uncoated peppers. The measured pepper's weight loss was about 6% compared to uncoated peppers. Reducing the oleic acid concentrations to 1.44% (Formulation #29) had no effect on the weight loss of coated peppers.

### Example 16: Weight loss - comparison between different hydrocolloid polymers

The effect of two different hydrocolloid polymers on coating formulations ability to slow down weight loss of coated produce was tested. Red peppers were left uncoated, or were coated with Formulations #27 and #30 detailed in Table 3. The temporal peppers' weight loss was followed for about one month. The data presented in Figure 15 shows that 0.5% locust bean gum (LBG; Formulation #2) more effectively slowed down the peppers' weight loss compared to 1% carboxymethyl cellulose (CMC) coated peppers (Formulation #30).

### Example 17: Weight loss - comparison between different hydrocolloid polymers

Following Example 16, the effect of another hydrocolloid polymer in the coating formulations was tested for its effect on weight loss of stored peppers. Red peppers were left uncoated, or were coated with Formulations #27, #31 and #32 detailed in Table 3. The peppers' weight loss was followed for about three and a half weeks. The data presented in Figure 16 teaches that Formulation #32 (comprising 0.5% guar gum and 17.5% beeswax) compared to Formulations #27 and #31 (comprising 0.5% locust bean gum or 0.5% guar gum in combination with 15% beeswax, respectively) was more effective in reducing the coated the peppers' weight loss.

### Example 18: Weight loss - comparison between morpholine and KOH as an alkaline component

The efficacy of morpholine and KOH as alkaline components in coating formulations for eggplants was tested. Eggplants were left uncoated, or were coated with Formulations #27, and #33 detailed in Table 3, and the eggplants' weight loss was followed for about three and a half weeks. Storage conditions were ambient. The data presented in Figure 17 shows that a KOH-based formulation (Formulation #27) was as effective in slowing down weight loss as morpholine-based formulation (Formulation #33).

### Example 19: Weight loss - comparison between different hydrocolloid polymers

The effect of two different hydrocolloid polymers on coating formulations ability to slow down weight loss of coated produce was tested. Eggplants were left uncoated, or were coated with Formulations #27 and #30 detailed in Table 3. The eggplants' weight loss was followed for about one month. In addition, the weight loss of the pedicel alone was examined. The data presented in Figure 18 shows that 0.5% locust bean gum (LBG; Formulation #27) slowed down more effectively the eggplants' weight loss compared to 1% carboxymethyl cellulose (CMC) (Formulation #30). This effect was observed on the whole eggplant fruit as well as on the pedicel alone and the eggplant without a pedicel.

### Example 20: Weight loss - comparison between different hydrocolloid polymers

Following Example 19, the effect of another hydrocolloid polymer in the coating formulations was tested for its ability to slow down the weight loss of coated produce. Eggplants were left uncoated, or were coated with Formulations #27, #31 and #32 detailed in Table 3. The eggplants' weight loss was followed for about three and a half weeks. The data presented in Figure 19 teaches that 0.5% locust bean gum (LBG; Formulation #27) slowed down the eggplants' weight loss more effectively as compared to 0.5% guar gum (GG) (Formulation #31). This superiority of LBG over GG was seen even when the beeswax concentrations in the GG-based formulation (Formulation #32) was raised to 2.5%.

### Example 21: The effect of KOH on tomatoes weight loss

To test the effect of KOH in the coating formulation on stored tomatoes, control tomatoes were left uncoated and the change in their fresh weight was compared with that of tomatoes coated with Formulation #27 as detailed in Table 3. The tomatoes' weight loss at ambient storage conditions was followed for about one and half months. As shown in Figure 20, the coating with Formulation #27 comprising KOH resulted in reduced tomatoes' weight loss by about 15% compared to the non-coated tomatoes. Thus, the use of inorganic alkaline components such as an alkali metal in coating formulations for tomatoes gives way to more efficacious and safer coating formulations.

## Claims

1. A method for reducing the weight loss of a postharvest plant matter by providing an artificial coat, comprising the steps of:
applying to a surface of said plant matter a composition comprising:
i. a gelling hydrocolloid polymer in a weight percent ranging from about 0.5% to about 5% of the total weight of the wet composition;
ii. an edible wax in a weight percent ranging from about 0.1% to about 5% of the total weight of the wet composition;
iii. a fatty acid;
iv. water; and
v. an edible alkaline component which is an inorganic salt, in a weight percent ranging from about 0.05% to about 2% of the total weight of the wet composition;
wherein the wet composition comprises less than 0.01% (w/w) of morpholine and less than 0.01% (w/w) of any additional emulsifier other than the edible alkaline component,
wherein the edible alkaline component enables formation of a homogeneous emulsion without any additional emulsifier; and
wherein the plant matter comprises a bulb having leaf scales;
allowing the excess composition to drip from the plant matter;
applying to the plant matter an additional composition comprising a cross-linking or gelation-inducing agent; and
drying the coating of the plant matter;
thereby forming a coating layer on the surface of said plant matter.

2. The method according to claim 1, wherein the edible alkaline component is an alkali metal salt or an alkaline earth metal salt.

3. The method according to any one of claims 1 or 2, wherein the edible alkaline component is selected from the group consisting of sodium hydroxide, potassium hydroxide, sodium carbonate, potassium carbonate, sodium bicarbonate, potassium bicarbonate and any combination thereof.

4. The method according to any one of claims 1 to 3,
wherein the edible alkaline component is present in a weight percent ranging from about 1% to about 30% of the total weight of the dry composition.

5. The method according to any one of claims 1 to 4,
wherein the gelling hydrocolloid polymer is selected from the group consisting of alginate, agar, agarose, gelatin, low methoxy pectin (LMP), chitosan, gellan, carrageenan, and any combination thereof;
or/preferably wherein the composition comprises the gelling hydrocolloid polymer in a weight percent ranging from about 20% to about 60% of the total weight of the dry composition.

6. The method according to any one of claims 1 to 5,
wherein the edible wax has a melting temperature of from about 40°C to about 70°C; or/preferably wherein the edible wax is selected from the group consisting of beeswax, carnauba wax, candelilla wax, alpha wax, montan wax, rice-bran wax, Japan wax and any combination thereof.

7. The method according to any one of claims 1 to 6,
wherein the fatty acid is selected from the group consisting of oleic acid, stearic acid, palmitic acid, lauric acid, myristic acid, behenic acid, isostearic acid and any combination thereof;
or/preferably wherein the composition comprises the fatty acid in a weight percent ranging from about 0.01% to about 2% of the total weight of the wet composition;
or/preferably wherein the composition comprises the fatty acid in a weight percent ranging from about 1% to about 40% of the total weight of the dry composition.

8. The method according to any one of claims 1 to 7,
wherein the postharvest plant matter is an edible plant matter;
preferably wherein the edible plant matter is selected from the group consisting of garlic, onions, and shallots;
preferably wherein the edible plant matter is selected from garlic or onions.

9. The method according to any one of claims 1 to 8,
wherein further comprising a natural compound isolated from the surface of said plant matter or a derivative thereof;
preferably wherein said natural compound is a sterol, selected from the group consisting of β-sitosterol, ergosterol, stigmasterol and any combination thereof.

10. The method according to claim 1, wherein the composition comprises:
i. about 0.5%-5% (w/w) of the gelling hydrocolloid polymer;
ii. about 0.1% - 5% (w/w) of the edible wax;
iii. about 0.01% - 2% (w/w) of the fatty acid;
iv. about 83% - 99% water; and
v. about 0. 05% - 2% (w/w) of the edible alkaline component,
of the total weight of the wet composition.

11. The method according to claim 1, wherein following the drying step the composition comprises:
i. about 20%-60% (w/w) of the gelling hydrocolloid polymer;
ii. about 2% - 35% (w/w) of the edible wax;
iii. about 1% - 40% (w/w) of the fatty acid;
iv. about 4% - 30% water; and
v. about 1% - 30% (w/w) of the edible alkaline component,
of the total weight of the dry composition.

12. The method according to any one of claims 10 and 11,
wherein the gelling hydrocolloid polymer is alginate;
or/preferably wherein the edible wax is beeswax;
or/preferably wherein the fatty acid is oleic acid;
or/preferably wherein the edible alkaline component is potassium hydroxide.

13. The method according to claim 1,
wherein the composition is applied by dipping said plant matter into said composition or by rubbing said composition onto the plant matter.

14. The method according to claim 1, wherein the postharvest plant matter is a bulb of an ornamental plant.

## Patentansprüche

1. Verfahren zur Verringerung des Gewichtsverlustes eines Pflanzenmaterials nach der Ernte durch Bereitstellung einer künstlichen Beschichtung, welches die Schritte umfasst:
Auftragen einer Zusammensetzung auf eine Oberfläche des Pflanzenmaterials, die umfasst:
i. ein gelierendes Hydrokolloidpolymer in einem Gewichtsprozentbereich von etwa 0,5% bis etwa 5% des Gesamtgewichts der nassen Zusammensetzung;
ii. ein essbares Wachs in einem Gewichtsprozentbereich von etwa 0,1% bis etwa 5% des Gesamtgewichts der nassen Zusammensetzung;
iii. eine Fettsäure;
iv. Wasser; und
v. eine essbare alkalische Komponente, die ein anorganisches Salz ist, in einem Gewichtsprozentbereich von etwa 0,05% bis etwa 2% des Gesamtgewichts der nassen Zusammensetzung;
worin die nasse Zusammensetzung weniger als 0,01% (w/w) Morpholin und weniger als 0,01% (w/w) eines zusätzlichen Emulgators außer der essbaren alkalischen Komponente umfasst,
worin die essbare alkalische Komponente die Bildung einer homogenen Emulsion ohne jeglichen zusätzlichen Emulgator ermöglicht; und
worin das Pflanzenmaterial eine Zwiebel mit Blattschuppen umfasst;
Abtropfenlassen der überschüssigen Zusammensetzung von dem Pflanzenmaterial;
Auftragen einer zusätzlichen Zusammensetzung, die ein Vernetzungs- oder Gelierungsmittel enthält, auf das Pflanzenmaterial; und
Trocknen der Beschichtung des Pflanzenmaterials;
wodurch eine Überzugsschicht auf der Oberfläche des Pflanzenmaterials ausgebildet wird.

2. Verfahren nach Anspruch 1, worin die essbare alkalische Komponente ein Alkalimetallsalz oder ein Erdalkalimetallsalz ist.

3. Verfahren nach einem der Ansprüche 1 oder 2, worin die essbare alkalische Komponente ausgewählt ist aus der Gruppe bestehend aus Natriumhydroxid, Kaliumhydroxid, Natriumcarbonat, Kaliumcarbonat, Natriumbicarbonat, Kaliumbicarbonat und jeder Kombination davon.

4. Verfahren nach einem der Ansprüche 1 bis 3, worin die essbare alkalische Komponente in einem Gewichtsprozentbereich von etwa 1% bis etwa 30% des Gesamtgewichts der Trockenzusammensetzung vorliegt.

5. Verfahren nach einem der Ansprüche 1 bis 4,
worin das gelierende Hydrokolloidpolymer ausgewählt ist aus der Gruppe bestehend aus Alginat, Agar, Agarose, Gelatine, Niedermethoxypektin (LMP), Chitosan, Gellan, Carrageenan und einer beliebigen Kombination davon;
oder/vorzugsweise worin die Zusammensetzung das gelierende Hydrokolloidpolymer in einem Gewichtsprozentbereich von etwa 20% bis etwa 60% des Gesamtgewichts der trockenen Zusammensetzung umfasst.

6. Verfahren nach einem der Ansprüche 1 bis 5,
worin das essbare Wachs eine Schmelztemperatur von etwa 40°C bis etwa 70°C aufweist;
oder/vorzugsweise worin das essbare Wachs ausgewählt ist aus der Gruppe bestehend aus Bienenwachs, Carnaubawachs, Candelillawachs, Alphawachs, Montanwachs, Reisklebewachs, Japanwachs und einer beliebigen Kombination davon.

7. Verfahren nach einem der Ansprüche 1 bis 6,
worin die Fettsäure ausgewählt ist aus der Gruppe bestehend aus Ölsäure, Stearinsäure, Palmitinsäure, Laurinsäure, Myristinsäure, Behensäure, Isostearinsäure und jeder Kombination davon;
oder/vorzugsweise worin die Zusammensetzung die Fettsäure in einem Gewichtsprozentbereich von etwa 0,01% bis etwa 2% des Gesamtgewichts der nassen Zusammensetzung umfasst;
oder/vorzugsweise, worin die Zusammensetzung die Fettsäure in einem Gewichtsprozentbereich von etwa 1% bis etwa 40% des Gesamtgewichts der trockenen Zusammensetzung umfasst.

8. Verfahren nach einem der Ansprüche 1 bis 7,
worin das Pflanzenmaterial nach der Ernte ein essbares Pflanzenmaterial ist;
vorzugsweise worin das essbare Pflanzenmaterial ausgewählt ist aus der Gruppe bestehend aus Knoblauch, Zwiebeln und Schalotten;
vorzugsweise worin das essbare Pflanzenmaterial ausgewählt ist unter Knoblauch oder Zwiebeln.

9. Verfahren nach einem der Ansprüche 1 bis 8,
worin es ferner eine natürliche Verbindung, die von der Oberfläche des Pflanzenmaterials isoliert wurde, oder ein Derivat davon umfasst;
vorzugsweise worin die natürliche Verbindung ein Sterol ist, ausgewählt aus der Gruppe bestehend aus β-Sitosterol, Ergosterol, Stigmasterol und jeder Kombination davon.

10. Verfahren nach Anspruch 1, worin die Zusammensetzung umfasst:
i. etwa 0,5%-5% (w/w) des gelierenden Hydrokolloidpolymers;
ii. etwa 0,1%-5% (w/w) des essbaren Wachses;
iii. etwa 0,01%-2% (w/w) der Fettsäure;
iv. etwa 83%-99% Wasser; und
v. etwa 0,05%-2% (w/w) der essbaren alkalischen Komponente,
bezogen auf das Gesamtgewicht der nassen Zusammensetzung.

11. Verfahren nach Anspruch 1, worin die Zusammensetzung nach dem Trocknungsschritt umfasst:
i. etwa 20-60% (w/w) des gelierenden Hydrokolloidpolymers;
ii. etwa 2%-35% (w/w) des essbaren Wachses;
iii. etwa 1%-40% (w/w) der Fettsäure;
iv. etwa 4%-30% Wasser; und
v. etwa 1%-30% (w/w) der essbaren alkalischen Komponente,
bezogen auf das Gesamtgewicht der trockenen Zusammensetzung.

12. Verfahren nach einem der Ansprüche 10 und 11,
worin das gelierende Hydrokolloid-Polymer Alginat ist;
oder/vorzugsweise, worin das essbare Wachs Bienenwachs ist;
oder/vorzugsweise, worin die Fettsäure Ölsäure ist;
oder/vorzugsweise worin die essbare alkalische Komponente Kaliumhydroxid ist.

13. Verfahren nach Anspruch 1,
wobei die Zusammensetzung durch Eintauchen des Pflanzenmaterials in die Zusammensetzung oder
durch Reiben der Zusammensetzung auf das Pflanzenmaterial aufgebracht wird.

14. Verfahren nach Anspruch 1, worin es sich bei dem Pflanzenmaterial nach der Ernte um eine Zwiebel einer Zierpflanze handelt.

## Revendications

1. Procédé pour réduire la perte de poids d'une matière végétale post-récolte en fournissant une couche artificielle, comprenant les étapes suivantes:
appliquer sur une surface de cette matière végétale une composition comprenant:
i. un polymère hydrocolloïde gélifiant dans un pourcentage en poids allant d'environ 0,5% à environ 5% du poids total de la composition humide;
ii. une cire comestible dans un pourcentage en poids allant d'environ 0,1% à environ 5% du poids total de la composition humide;
iii. un acide gras;
iv. de l'eau; et
v. un composant alcalin comestible qui est un sel inorganique, dans un pourcentage en poids allant d'environ 0,05% à environ 2% du poids total de la composition humide;
dans lequel la composition humide comprend moins de 0,01% (p/p) de morpholine et moins de 0,01% (p/p) de tout émulsifiant supplémentaire autre que le composant alcalin comestible,
dans lequel le composant alcalin comestible permet la formation d'une émulsion homogène sans émulsifiant supplémentaire; et
dans lequel la matière végétale comprend un bulbe avec des écailles de feuilles;
laisser la composition excédentaire s'égoutter de la matière végétale;
appliquer sur la matière végétale une composition supplémentaire comprenant un agent réticulant ou induisant la gélification; et
sécher l'enrobage de la matière végétale;
formant ainsi une couche d'enrobage à la surface de ladite matière végétale.

2. Procédé selon la revendication 1, dans lequel le composant alcalin comestible est un sel de métal alcalin ou un sel de métal alcalino-terreux.

3. Procédé selon l'une des revendications 1 ou 2, dans lequel le composant alcalin comestible est choisi dans le groupe constitué par l'hydroxyde de sodium, l'hydroxyde de potassium, le carbonate de sodium, le carbonate de potassium, le bicarbonate de sodium, le bicarbonate de potassium et toute combinaison de ceux-ci.

4. Procédé selon l'une des revendications 1 à 3, dans lequel le composant alcalin comestible est présent dans un pourcentage en poids allant d'environ 1% à environ 30% du poids total de la composition sèche.

5. Procédé selon l'une des revendications 1 à 4,
dans lequel le polymère hydrocolloïde gélifiant est choisi dans le groupe constitué par l'alginate, l'agar, l'agarose, la gélatine, la pectine à faible teneur en méthoxy (LMP), le chitosane, le gellane, le carraghénane et toute combinaison de ceux-ci;
ou/de préférence, dans lequel la composition comprend le polymère hydrocolloïde gélifiant dans un pourcentage en poids allant d'environ 20% à environ 60% du poids total de la composition sèche.

6. Procédé selon l'une des revendications 1 à 5,
dans lequel la cire comestible a une température de fusion d'environ 40°C à environ 70°C;
ou/de préférence, dans lequel la cire comestible est choisie dans le groupe constitué par la cire d'abeille, la cire de carnauba, la cire de candelilla, la cire alpha, la cire de montan, la cire de riz-branche, la cire du Japon et toute combinaison de ces cires.

7. Procédé selon l'une des revendications 1 à 6,
dans lequel l'acide gras est choisi dans le groupe constitué de l'acide oléique, de l'acide stéarique, de l'acide palmitique, de l'acide laurique, de l'acide myristique, de l'acide béhénique, de l'acide isostéarique et de toute combinaison de ceux-ci;
ou/de préférence, dans lequel la composition comprend l'acide gras dans un pourcentage de poids allant d'environ 0,01% à environ 2% du poids total de la composition humide;
ou/de préférence, dans lequel la composition comprend l'acide gras dans un pourcentage de poids allant d'environ 1% à environ 40% du poids total de la composition sèche.

8. Procédé selon l'une des revendications 1 à 7,
dans lequel la matière végétale post-récolte est une matière végétale comestible;
de préférence, dans lequel la matière végétale comestible est choisie dans le groupe constitué par l'ail, les oignons et les échalotes;
de préférence, la matière végétale comestible est choisie parmi l'ail ou les oignons.

9. Procédé selon l'une des revendications 1 à 8,
comprenant en outre un composé naturel isolé de la surface de ladite matière végétale ou un dérivé de celui-ci;
de préférence, ledit composé naturel est un stérol, choisi dans le groupe constitué du β-sitostérol, de l'ergostérol, du stigmastérol et de toute combinaison de ceux-ci.

10. Procédé selon la revendication 1, dans lequel la composition comprend:
i. environ 0,5%-5% (p/p) du polymère hydrocolloïde gélifiant;
ii. environ 0,1%-5% (p/p) de la cire comestible;
iii. environ 0,01%-2% (p/p) d'acide gras;
iv. environ 83%-99% d'eau; et
v. environ 0,05%-2% (p/p) du composant alcalin comestible,
du poids total de la composition humide.

11. Procédé selon la revendication 1, dans lequel, après l'étape de séchage, la composition comprend:
i. environ 20%-60% (p/p) du polymère hydrocolloïde gélifiant;
ii. environ 2%-35% (p/p) de cire comestible;
iii. environ 1%-40% (p/p) d'acide gras;
iv. environ 4%-30% d'eau; et
v. environ 1%-30% (p/p) du composant alcalin comestible,
du poids total de la composition sèche.

12. Procédé selon l'une des revendications 10 et 11,
dans lequel le polymère hydrocolloïde gélifiant est l'alginate;
ou/de préférence dans lequel la cire comestible est de la cire d'abeille;
ou/de préférence dans lequel l'acide gras est l'acide oléique;
ou/de préférence, dans lequel le composant alcalin comestible est l'hydroxyde de potassium.

13. Procédé selon la revendication 1,
dans lequel la composition est appliquée par trempage de la matière végétale dans ladite composition ou par frottement de ladite composition sur la matière végétale.

14. Procédé selon la revendication 1, dans lequel la matière végétale post-récolte est un bulbe de plante ornementale.
